# EUROPEAN PATENT SPECIFICATION

(11) **EP 3 310 472 B1**
(45) Date of publication and mention of the grant of the patent: **03.01.2024**
(21) Application number: 16731301.4
(22) Date of filing: 17.06.2016
(51) Int. Cl.: C01B 3/26, B01J 19/12, B01J 8/08, B01J 8/12

(54) **HYDROGEN PRODUCTION PROCESS**
WASSERSTOFFHERSTELLUNGSVERFAHREN
PROCÉDÉ DE PRODUCTION D'HYDROGÈNE

(30) Priority: 17.06.2015 GB 201510659
(43) Date of publication of application: 25.04.2018
(73) Proprietor: Oxford University Innovation Limited, Oxford OX2 0JB (GB); King Abdulaziz City for Science and Technology, Riyadh 11442 (SA)
(72) Inventor: EDWARDS, Peter P., Oxford Oxfordshire OX1 3QR (GB); KUZNETSOV, Vladimir L., Oxford Oxfordshire OX1 3QR (GB); XIAO, Tiancun, Oxford Oxfordshire OX1 3QR (GB); SLOCOMBE, Daniel, Oxford Oxfordshire OX1 3QR (GB); GONZALEZ-CORTES, Sergio, Oxford Oxfordshire OX1 3QR (GB); AL-MEGREN, Hamid, Riyadh 11442 (SA); ALDAWSARI, Afrah, Oxford Oxfordshire OX1 3QR (GB); ALKINANI, Mohammad, Riyadh 11442 (SA)
(74) Representative: J A Kemp LLP
(86) International application number: PCT/GB2016/051827
(87) International publication number: WO 2016/203264

(56) References cited:
- JP-A- 2004 203 679
- KR-A- 20090 127 451
- US-A1- 2002 155 037
- US-A1- 2004 223 907
- US-A1- 2009 272 653

## Description

### FIELD OF THE INVENTION

The invention relates to a process for producing hydrogen. A device suitable for use in such a process is also provided, as is the use of such a device in the production of hydrogen.

### BACKGROUND TO THE INVENTION

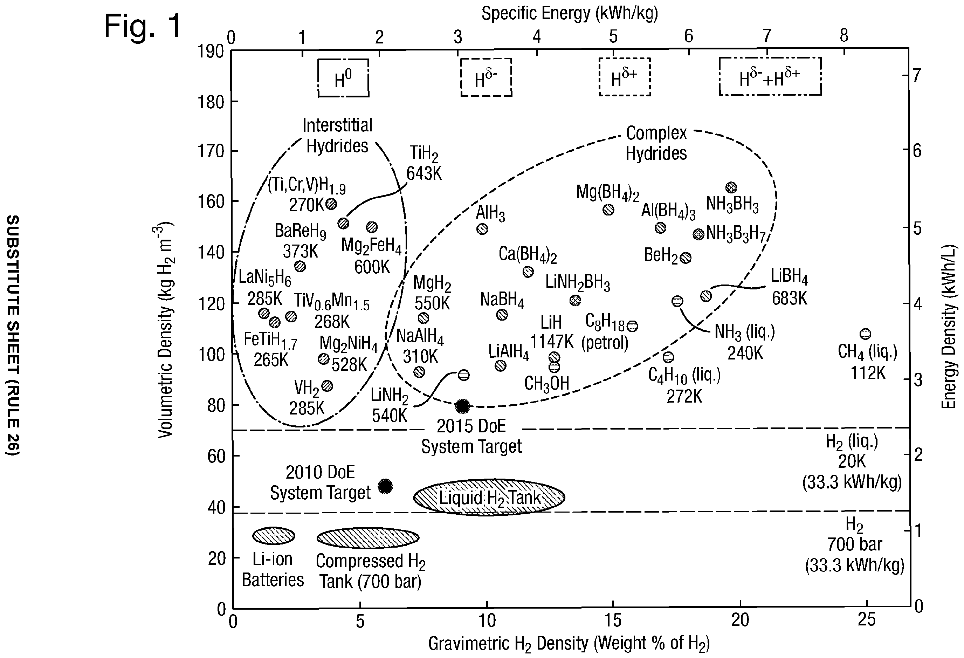

Hydrogen is widely regarded as a promising alternative to carbon-based fuels for transportation applications. However, one of the greatest technological barriers for the widespread use of hydrogen is the lack of a safe, low-weight and low-cost storage method with a high energy density. Present hydrogen storage options for automotive applications have centred upon high-pressure (up to 700 bar) gas containers or cryogenically cooled (liquefied) fluid hydrogen. One downside of these methods is a significant energy penalty since up to 20% of the chemical energy content of hydrogen is required to compress the gas to 700 bar and up to 35% to liquefy it. There are also potential safety issues with both these storage options for vehicular applications associated with very high pressure, low temperature and liquid hydrogen boil-off. Low volumetric densities of both these options (see Figure 1) is also a significant consideration as there is limited space for fuel storage within a small vehicle.

The most viable alternative to compressed and liquid hydrogen is the storage of hydrogen in solids or liquids. A summary of volumetric and gravimetric hydrogen storage densities of some materials is illustrated in Figure 1. Several interstitial metal hydrides offer attractive volumetric hydrogen densities and can operate at low temperatures (from zero to 300 °C). However, transition metal hydrides have low gravimetric hydrogen densities and are too heavy for vehicular application. Complex hydrides of light elements have attractive volumetric and gravimetric storage densities (see Figure 1) but do not meet other important operating requirements for transportation applications, including high operating temperatures and safety issues.

For transportation uses, a suitable hydrogen storage material should be able to store a high weight percent of hydrogen and contain a high volume density of hydrogen and desorb hydrogen at low temperature and pressure. Ideally, such a material should be inexpensive, resistant to poisoning by trace impurities, safe and usable on exposure to air.

Another potential alternative to hydrogen storage is to produce hydrogen on-board using a hydrogen-containing material as the reformate, such as for instance a hydrocarbon, an amine, ammonia or a hydride. Hydrocarbon steam reforming technologies have been used successfully in stationary applications, however large scale steam reforming units cannot easily be transferred to automotive applications, due to size and weight limitations and the limited availability of steam on board a vehicle. Also the presence of CO is detrimental to the fuel cell. The number of reforming patents peaked in 2004 but, from then on, on-board reforming has received less attention, mainly due to the U.S. Department of Energy (DoE) no-go decision. Chemical hydrides have a very high volumetric H₂ storage density on a materials basis. Complex hydrides, such as some boron hydrides, are among the most promising hydrogen storage systems. However, although substantial progress has been made, the effective values of storage densities are well below theoretical values. For sodium borohydride, which contains 10.6 wt% of hydrogen, the high energy penalty and cost in regenerating the by-products back to fuel is seen as a great drawback. Also, the low stability of the hydride makes the on-board hydride difficult to be used safely.

Process for producing hydrogen using microwaves are known from JP2004203679A, US2009272653A1 and KR20090127451A.

### SUMMARY OF THE INVENTION

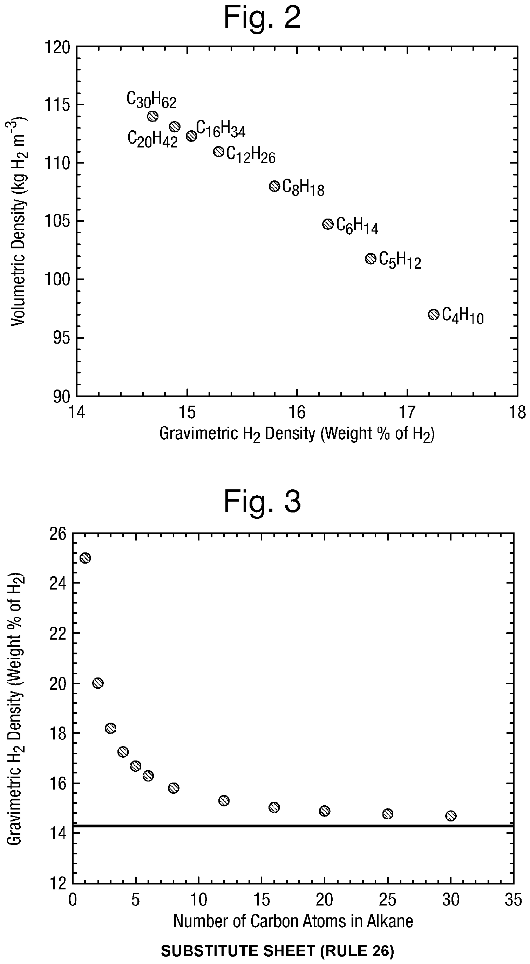

The inventors appreciate that hydrocarbons should be the most stable and safe hydrogen storage materials, especially hydrocarbons with a relatively high melting point, such as, for instance, liquid hydrocarbons and hydrocarbons which are solid under ambient conditions, such as paraffin waxes. Such hydrocarbons can be stored safely with little or no risk of leakage or of contaminating the environment and, even when exposed to air, are typically not volatile or combustible without ignition. Such hydrocarbons also have attractive volumetric and gravimetric hydrogen storage densities, making them ideal hydrogen storage materials (see Figures 1 to 3). For example, in C₃₀H₆₂, the total volumetric and gravimetric hydrogen storage densities are around 113 kg H₂ m⁻³ and 14.6 wt % H₂, respectively.

Prior to the present invention, however, no work had been done on the hydrogen extraction from such hydrocarbons, probably due to the high stability and low activity of such hydrocarbons. The inventors have overcome this difficulty by devising a process, and a device for use in such a process, that enables the facile release of hydrogen from such hydrocarbons. The process employs electromagnetic radiation to facilitate the release of hydrogen from the hydrocarbon when in contact with a suitable catalyst.

Accordingly, the invention provides a process for producing hydrogen according to claim

The invention also provides a composition for generating hydrogen according to claim 6.

Further provided is the use of a composition of the invention as defined above for generating hydrogen. The composition may for instance be used for generating hydrogen for a fuel cell. The fuel cell may for instance be a proton exchange membrane (PEM) fuel cell.

Further provided is the use of a composition of the invention as defined above as a hydrogen storage material. The composition may for instance be used as a hydrogen storage material for a fuel cell. Thus, the composition may be used as a hydrogen storage material in a vehicle powered by a fuel cell, or for instance as a hydrogen storage material in an electronic device powered by a PEM fuel cell.

The invention also provides a fuel cell module comprising (a) a fuel cell and (b) a hydrogen storage material comprising a composition of the invention as defined above. The fuel cell may be a PEM fuel cell. The fuel cell module may further comprise a source of electromagnetic radiation for exposing the composition to electromagnetic radiation and thereby effecting decomposition of the at least one organic compound to produce hydrogen. Said decomposition may be catalytic decomposition.

The invention also provides a vehicle or an electronic device comprising a fuel cell module of the invention as defined above.

The invention also provides an electromagnetic activation system suitable for producing hydrogen from hydrocarbons according to claim 11.

Further provided is the use of an electromagnetic activation system of the invention as defined above for generating hydrogen from a composition of the invention as defined above.

Further provided is a system for generating hydrogen according to claim 14.

### BRIEF DESCRIPTION OF THE FIGURES

Fig. 1 summarises the hydrogen storage densities of a variety of energy storage materials and technologies.
Fig. 2 is a graph of the volumetric hydrogen storage density (y axis) in units of kg H₂ m⁻³, versus the gravimetric hydrogen storage density (x axis) in terms of the percentage of H₂ by weight in alkanes of different chain lengths (C₄ up to C₃₀).
Fig. 3 is a graph of the gravimetric hydrogen storage density in an alkane (y axis) in units of the percentage of H₂ by weight in the alkane, versus the number of carbon atoms in the alkane (x axis).
Fig. 4 is a schematic diagram of an electromagnetic hydrogen production system (electromagnetic activation system) in accordance with the invention, in which 1 is a feedstock, 2 is a microwave source, and 3 is a reaction cavity. The reaction cavity shows the electric field distribution in the TM010 mode, used to heat a cylindrical sample passing vertically through the cavity.

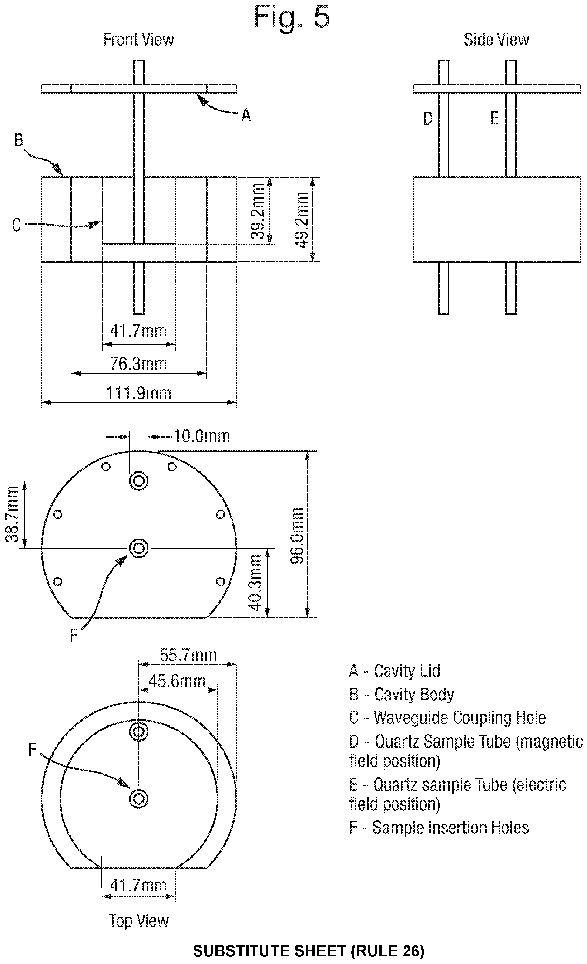

Fig. 5 is a diagram of a microwave reaction cavity for use in the electromagnetic activation system of the invention. The cavity shown here uses the TM010 mode for both electric and magnetic heating and operates at a frequency of 2.45GHz. Different embodiments and designs are described herein to account for optimum catalytic enhancement in different modes, at different frequencies and in different form-factors. In this example, the coupling window is connected to a WR340 waveguide, however, in other embodiments, the coupling is impedance matched to enable critical coupling and effective heat generation in the sample.
Fig. 6 is a graph showing the composition, in terms of % by volume, of the major gaseous compounds obtained from the various samples tested in the Examples herein.
Fig. 7 is a graph showing the amounts in mol. % of the various gaseous products found in the product stream of the reaction described in Example 7 (irradiation of Arabian crude oil in the presence of Fe/H-ZSM-5 catalyst) after reaction times of 5 minutes, 10 minutes, 15 minutes and 20 minutes.

### DETAILED DESCRIPTION OF THE INVENTION

The process of the invention is a process for producing hydrogen as defined in claim 1.

The composition is a solid or liquid composition. The intended meaning of "solid or liquid composition", here, is a composition which is in the solid state or in the liquid state at standard ambient temperature and pressure (SATP), i.e. at a temperature of 298.15 K (25 °C) and at 100,000 Pa (1 bar, 14.5 psi, 0.9869 atm). Such a composition is not necessarily therefore in the solid or liquid state under the conditions (i.e. the temperature and pressure) under which the process is carried out, because the process may for example be carried out at an elevated temperature and/or at a reduced pressure such that the one or more organic compounds in the composition may be in the gaseous state under those conditions (or, for instance, if they are normally solid, then they may be in the liquid state, i.e. melted, under those conditions). In many cases, however, that is not the case and the compostion is also in the solid state or in the liquid state under the conditions (i.e. the temperature and pressure) under which the process is carried out. The process may for instance be carried out at or near SATP, in which case the compostion will also be in the solid state or in the liquid state, as the case may be, under the process conditions. Indeed, the process of the invention can be, and often is, carried out under ambient conditions.

The at least one organic compound usually makes up a significant proportion of the composition by weight. Typically, therefore, the at least one organic compound which is employed in the composition is at least one organic compound which is in the solid or liquid state, meaning in the solid or liquid state at SATP. The composition may comprise only one such organic compound, in which case that compound is a solid or a liquid, meaning a solid or liquid at SATP. The composition often however comprises more than one such organic compound, for instance it may comprise a mixture of two or more such organic compounds. In that case, the mixture of the two or more organic compounds, which are selected from hydrocarbons and compounds which comprise a hydrocarbyl group, are compounds that are in the solid or liquid state (meaning in the solid or liquid state at SATP).

The term "solid or liquid composition" in this context is of course intended to encompass mixtures of a solid and a liquid, for instance a mixture of a solid catalyst and a liquid organic phase. A suspension of solid catalyst particles in a liquid organic phase would generally be regarded as a "liquid composition" and a suspension of solid catalyst particles in a solid (e.g. wax) organic phase would be regarded as a "solid composition". Again, the terms "solid" and "liquid" here refer to the state in which the material is in at SATP.

In one embodiment, therefore, the invention provides a process for producing hydrogen, which process comprises exposing a solid or liquid composition to microwave radiation, which composition comprises at least one organic compound and a catalyst, wherein the at least one organic compound is selected from hydrocarbons and compounds which comprise a hydrocarbyl group. Generally, in this embodiment, the at least one organic compound is at least one organic compound which is in the solid or liquid state (meaning in the solid or liquid state at SATP).

Often, the at least one organic compound which is employed in the composition is in the solid state. This means that the at least one organic compound is typically at least one organic compound which is in the solid state at SATP. The at least one organic compound is not necessarily in the solid state under the conditions (i.e. the temperature and pressure) under which the process is carried out, because the process may for example be carried out at an elevated temperature and/or at a reduced pressure such that the at least one organic compound may be in the liquid or gaseous state under the process conditions. In many cases, however, that is not the case and the at least one organic compound is also in the solid state under the conditions (i.e. the temperature and pressure) under which the process is carried out. The process may for instance be carried out at or near SATP.

The composition may comprise only one such organic compound, in which case that compound is a compound which is in the solid state (meaning in the solid state at SATP). The composition often however comprises more than one such organic compound, for instance it may comprise a mixture of two or more such organic compounds. In that case, the mixture of the two or more organic compounds, which are selected from hydrocarbons and compounds which comprise a hydrocarbyl group, is in the solid state (again, meaning in the solid state at SATP).

In one preferred embodiment, therefore, the invention provides a process for producing hydrogen, which process comprises exposing a solid composition to microwave radiation, which composition comprises at least one organic compound and a catalyst, wherein the at least one organic compound is selected from hydrocarbons and compounds which comprise a hydrocarbyl group. Generally, in this embodiment, the at least one organic compound is in the solid state (meaning in the solid state at SATP).

The one or more organic compounds are compounds that are solid at standard ambient temperature and pressure (SATP). Such compounds include hydrocarbons that have at least 18 carbon atoms, and compounds which comprise one or more hydrocarbyl groups wherein the total number of carbon atoms in the one or more hydrocarbyl groups is at least 18. Thus, such organic compounds include hydrocarbons that have at least 18 carbon atoms, compounds which comprise a single hydrocarbyl group that has at least 18 carbon atoms, and compounds which comprise a plurality of hydrocarbyl groups which between them have at least 18 carbon atoms.

In a preferred embodiment, therefore, the invention provides a process for producing hydrogen, which process comprises exposing a composition to microwave radiation, which composition comprises at least one organic compound and a catalyst, wherein the at least one organic compound is selected from: hydrocarbons that have at least 18 carbon atoms, and compounds which comprise one or more hydrocarbyl groups wherein the total number of carbon atoms in the one or more hydrocarbyl groups is at least 18.

The term "hydrocarbon", as used herein, takes its normal meaning. Thus, a hydrocarbon is a compound which consists only of carbon and hydrogen. For the avoidance of doubt, hydrocarbons include straight-chained and branched, saturated and unsaturated aliphatic hydrocarbon compounds, including alkanes, alkenes, and alkynes, as well as saturated and unsaturated cyclic aliphatic hydrocarbon compounds, including cycloalkanes, cycloalkenes and cycloalkynes, as well as hydrocarbon polymers, for instance polyolefins. Hydrocarbons also include aromatic hydrocarbons, i.e. hydrocarbons comprising one or more aromatic rings. The aromatic rings may be monocyclic or polycylic. Aliphatic hydrocarbons which are substituted with one or more aromatic hydrocarbons, and aromatic hydrocarbons which are substituted with one or more aliphatic hydrocarbons, are also of course encompassed by the term "hydrocarbon" (such compounds consisting only of carbon and hydrogen) as are straight-chained or branched aliphatic hydrocarbons that are substituted with one or more cyclic aliphatic hydrocarbons, and cyclic aliphatic hydrocarbons that are substituted with one or more straight-chained or branched aliphatic hydrocarbons.

A "Cₙ₋ₘ hydrocarbon", where n and m are integers, is a hydrocarbon, as defined above, having from n to m carbon atoms.

The terms "hydrocarbyl group" and "hydrocarbyl", as used herein, refer to a radical of a hydrocarbon as defined above, obtainable by removing a hydrogen atom from the hydrocarbon.

A "Cₙ₋ₘ hydrocarbyl group" or "Cₙ₋ₘ hydrocarbyl" refers to a hydrocarbyl group having from n to m carbon atoms.

The term "alkane", as used herein, refers to a linear or branched chain saturated hydrocarbon compound. A "Cₙ₋ₘ alkane" refers to an alkane having from n to m carbon atoms.

The term "cycloalkane", as used herein, refers to a saturated cyclic aliphatic hydrocarbon compound.

The term "alkene", as used herein, refers to a linear or branched chain hydrocarbon compound comprising one or more double bonds. A "Cₙ₋ₘ alkene" refers to an alkene having from n to m carbon atoms. Alkenes typically comprise one or two double bonds. The terms "alkene" and "olefin" may be used interchangeably. The one or more double bonds may be at any position in the hydrocarbon chain. The alkenes may be cis- or trans-alkenes (or as defined using E- and Z- nomenclature). An alkene comprising a terminal double bond may be referred to as an "alk-1-ene" (e.g. hex-1-ene), a "terminal alkene" (or a "terminal olefin"), or an "alpha-alkene" (or an "alpha-olefin"). The term "alkene", as used herein also often includes cycloalkenes.

The term "cylcoalkene", as used herein, refers to partially unsaturated cyclic hydrocarbon compound.

The term "aromatic compound", "aromatic hydrocarbon" or "aromatic hydrocarbon compound", as used herein, refers to a hydrocarbon compound comprising one or more aromatic rings. The aromatic rings may be monocyclic or polycylic.

An alkyl group is a saturated linear or branched chain aliphatic hydrocarbyl group. "Cₙ₋ₘ alkyl" refers to an alkyl group having from n to m carbon atoms.

A cycloalkyl group is a saturated cyclic aliphatic hydrocarbyl group. "Cₙ₋ₘ cycloalkyl" refers to a cycloalkyl group having from n to m carbon atoms.

An alkenyl group is a linear or branched chain hydrocarbyl group comprising one or more double bonds. "Cₙ₋ₘ alkenyl" refers to an alkenyl group having from n to m carbon atoms.

Alkenyl groups typically comprise one or two double bonds.

A cycloalkenyl group is a cyclic aliphatic hydrocarbyl group comprising one or more double bonds. "Cₙ₋ₘ cycloalkenyl" refers to a cycloalkenyl group having from n to m carbon atoms.

Particularly suitable "compounds which comprise a hydrocarbyl group" which may be employed in the process of the invention are compounds in which one or more hydrocarbyl groups are bonded to a group containing an oxygen atom. Such compounds include certain types of waxes. The group containing an oxygen atom may, for instance, be a hydroxy (-OH), aldehyde (-C(O)H), carboxy (-C(O)OH), ether (-O-), keto (C=O), or ester (-C(O)O-) group, or a moiety containing two or more ester groups, for instance a "diester" group such as -C(O)O-CH₂-CH₂-OC(O)-, or "triester" group such as -C(O)O-CH₂-CH(OC(O)-)-CH₂-OC(O)-.

Thus, the compounds which comprise a hydrocarbyl group, from which the at least one organic compound is selected, may for instance be compounds of the following formulae:

R¹OH (I)

R¹C(O)H (II)

R¹C(O)OH (III)

R²OR³ (IV)

R²C(O)R³ (V)

R²C(O)OR³ (VI)

R²-C(O)O-CH₂-CH₂-OC(O)-R³ (VII)

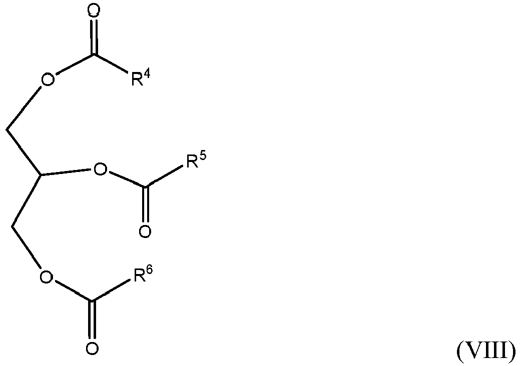

wherein
R¹ to R⁶ are defined as in claim 3.

The at least one organic compound is selected from hydrocarbons having at least 12 carbon atoms, and compounds which comprise a hydrocarbyl group which has at least 12 carbon atoms.

The hydrocarbons having at least 12 carbon atoms may, for instance, be C₁₂₋₁₅₀ hydrocarbons and hydrocarbon polymers. The hydrocarbon polymers, may, for instance, be polyolefins, including for example polyethylene, polypropylene, polymethylpentene, polybutene-1, and including for instance polyolefin elastomers, such as, for example, polyisobutylene, ethylene propylene rubber, and ethylene propylene diene monomer (M-class) rubber. The hydrocarbon polymers may, for example, be hydrocarbon polymers which have a molecular weight of at least 1,800 Da (lower molecular weights than this being covered by the term "C₁₂₋₁₅₀ hydrocarbons"). Often, the hydrocarbons having at least 12 carbon atoms are C₁₂₋₁₅₀ hydrocarbons. More typically, they are C₁₂₋₁₀₀ hydrocarbons. For instance, they may be C₁₂₋₈₀ hydrocarbons, or for instance, C₁₂₋₆₀ hydrocarbons. They may for example be C₁₂₋₅₀ hydrocarbons. Often, for instance, they are C₁₂₋₄₀ hydrocarbons.

The hydrocarbons having at least 12 carbon atoms are typically straight-chained, branched or cyclic, saturated or unsaturated aliphatic hydrocarbon compounds having at least 12 carbon atoms. They may for instance be straight-chained, branched or cyclic, saturated aliphatic hydrocarbon compounds having at least 12 carbon atoms. The hydrocarbons are typically therefore alkanes having at least 12 carbon atoms (including for instance paraffin waxes and polyolefins), cycloalkanes having at least 12 carbon atoms, alkenes having at least 12 carbon atoms and cycloalkenes having at least 12 carbon atoms. Often, for instance, the hydrocarbons having at least 12 carbon atoms from which the at least one organic compound may be selected are alkanes having at least 12 carbon atoms or alkenes having at least 12 carbon atoms. Typically, they are alkanes having at least 12 carbon atoms.

Thus, the hydrocarbons from which the at least one organic compound is selected are typically straight-chained, branched or cyclic, saturated or unsaturated aliphatic C₁₂₋₁₅₀ hydrocarbons. They may however be straight-chained, branched or cyclic, saturated or unsaturated aliphatic C₁₂₋₁₀₀ hydrocarbons, or for instance straight-chained, branched or cyclic, saturated or unsaturated aliphatic C₁₂₋₈₀ hydrocarbons. In one embodiment, they are straight-chained, branched or cyclic, saturated or unsaturated aliphatic C₁₂₋₆₀ hydrocarbons. They may for example be straight-chained, branched or cyclic, saturated or unsaturated aliphatic C₁₂₋₅₀ hydrocarbons. Often, for instance, they are straight-chained, branched or cyclic, saturated or unsaturated aliphatic C₁₂₋₄₀ hydrocarbons.

The hydrocarbons from which the at least one organic compound is selected may for instance be C₁₂₋₁₅₀ alkanes and C₁₂₋₁₅₀ alkenes. Thus, they may be C₁₂₋₁₀₀ alkanes and C₁₂₋₁₀₀ alkenes, or for instance C₁₂₋₈₀ alkanes and C₁₂₋₈₀ alkenes. In one embodiment, they are C₁₂₋₆₀ alkanes and C₁₂₋₆₀ alkenes. They may for example be C₁₂₋₅₀ alkanes and C₁₂₋₅₀ alkenes. Often, for instance, they are C₁₂₋₄₀ alkanes and C₁₂₋₄₀ alkenes.

More typically, the hydrocarbons from which the at least one organic compound is selected are C₁₂₋₁₅₀ alkanes. They may for instance be C₁₂₋₁₀₀ alkanes, or for instance C₁₂₋₈₀ alkanes. In one embodiment, they are C₁₂₋₆₀ alkanes. They may for example be C₁₂₋₅₀ alkanes. C₁₂₋₄₀ alkanes are also preferred.

The hydrocarbyl group which has at least 12 carbon atoms may, for instance, be C₁₂₋₁₅₀ hydrocarbyl. More typically, it is C₁₂₋₁₀₀ hydrocarbyl. For instance, it may be C₁₂₋₈₀ hydrocarbyl, or for instance, C₁₂₋₆₀ hydrocarbyl. It may for example be C₁₂₋₅₀ hydrocarbyl. Often, for instance, it is C₁₂₋₄₀ hydrocarbyl. In some embodiments, for example it is C₁₂₋₃₀ hydrocarbyl, or for instance a C₁₂₋₂₀ hydrocarbyl.

The hydrocarbyl group which has at least 12 carbon atoms is typically a straight-chained, branched or cyclic, saturated or unsaturated aliphatic hydrocarbyl group having at least 12 carbon atoms. The hydrocarbyl group is typically therefore an alkyl group having at least 12 carbon atoms, a cycloalkyl group having at least 12 carbon atoms, an alkenyl group having at least 12 carbon atoms or a cycloalkenyl group having at least 12 carbon atoms. Often, for instance, the hydrocarbyl group having at least 12 carbon atoms is an alkyl group having at least 12 carbon atoms or an alkenyl group having at least 12 carbon atoms. Typically, it is an alkyl group having at least 12 carbon atoms.

Thus, the hydrocarbyl group which has at least 12 carbon atoms is typically a straight-chained, branched or cyclic, saturated or unsaturated aliphatic C₁₂₋₁₅₀ hydrocarbyl. It may however be a straight-chained, branched or cyclic, saturated or unsaturated aliphatic C₁₂₋₁₀₀ hydrocarbyl, or for instance a straight-chained, branched or cyclic, saturated or unsaturated aliphatic C₁₂₋₈₀ hydrocarbyl. In one embodiment, it is a straight-chained, branched or cyclic, saturated or unsaturated aliphatic C₁₂₋₆₀ hydrocarbyl. It may for example be a straight-chained, branched or cyclic, saturated or unsaturated aliphatic C₁₂₋₅₀ hydrocarbyl. Often, for instance, it is a straight-chained, branched or cyclic, saturated or unsaturated aliphatic C₁₂₋₄₀ hydrocarbyl. In some embodiments, for example it is a straight-chained, branched or cyclic, saturated or unsaturated aliphatic C₁₂₋₃₀ hydrocarbyl, or for instance a straight-chained, branched or cyclic, saturated or unsaturated aliphatic C₁₂₋₂₀ hydrocarbyl.

The hydrocarbyl group which has at least 12 carbon atoms may for instance be C₁₂₋₁₅₀ alkyl or C₁₂₋₁₅₀ alkenyl. Thus, it may be C₁₂₋₁₀₀ alkyl or C₁₂₋₁₀₀ alkenyl, or for instance C₁₂₋₈₀ alkyl or C₁₂₋₈₀ alkenyl. In one embodiment, it is a C₁₂₋₆₀ alkyl or a C₁₂₋₆₀ alkenyl group. It may for example be C₁₂₋₅₀ alkyl or C₁₂₋₅₀ alkenyl. Often, for instance, it is C₁₂₋₄₀ alkyl or C₁₂₋₄₀ alkenyl. In some embodiments, for example it is C₁₂₋₃₀ alkyl or C₁₂₋₃₀ alkenyl, or for instance C₁₂₋₂₀ alkyl or C₁₂₋₂₀ alkenyl.

More typically, the hydrocarbyl group which has at least 12 carbon atoms is a C₁₂₋₁₅₀ alkyl group. It may for instance be C₁₂₋₁₀₀ alkyl, or for instance C₁₂₋₈₀ alkyl. In one embodiment, it is a C₁₂₋₆₀ alkyl group. It may for example be C₁₂₋₅₀ alkyl. Often, for instance, it is C₁₂₋₄₀ alkyl. In some embodiments, for example it is C₁₂₋₃₀ alkyl or, for instance, C₁₂₋₂₀ alkyl.

The compounds which comprise a hydrocarbyl group that has at least 12 carbon atoms may for instance be compounds in which one or more hydrocarbyl groups (at least one of which is said hydrocarbyl group that has at least 12 carbon atoms) are bonded to a group containing an oxygen atom.

Thus, often, the compounds which comprise a hydrocarbyl group which has at least 12 carbon atoms are compounds of formulae (I), (II), (III), (IV), (V), (VI), (VII) and (VIII) as defined above, wherein the, or at least one of the, hydrocarbyl groups in the compound is a said hydrocarbyl group that has at least 12 carbon atoms.

The compounds which comprise a hydrocarbyl group which has at least 12 carbon atoms may therefore be compounds of formulae (I), (II) and (III) in which the hydrocarbyl group R¹ is said hydrocarbyl group that has at least 12 carbon atoms.

R¹ in the compounds of formulae (I), (II) and (III) may be as further defined above for the hydrocarbyl group that has at least 12 carbon atoms.

Typically, however, R¹ in the compounds of formulae (I), (II) and (III) is C₁₂₋₆₀ hydrocarbyl. It may for example be C₁₂₋₅₀ hydrocarbyl. Often, for instance, it is C₁₂₋₄₀ hydrocarbyl. In some embodiments, for example, R¹ in these compounds is C₈₋₃₀ hydrocarbyl, or for instance a C₁₂₋₂₀ hydrocarbyl. Typically, the hydrocarbyl is a straight-chained, branched or cyclic, saturated or unsaturated aliphatic hydrocarbyl group.

R¹ is often for instance a C₁₂₋₆₀ alkyl or a C₁₂₋₆₀ alkenyl group. It may for example be C₁₂₋₅₀ alkyl or C₁₂₋₅₀ alkenyl. Often, for instance, it is C₁₂₋₄₀ alkyl or C₁₂₋₄₀ alkenyl. In some embodiments, for example R¹ is C₁₂₋₃₀ alkyl or C₁₂₋₃₀ alkenyl, or for instance C₁₂₋₂₀ alkyl or C₁₂₋₂₀ alkenyl. More typically, R¹ is a C₁₂₋₆₀ alkyl group. It may for example be C₁₂₋₅₀ alkyl. Often, for instance, it is C₁₂₋₄₀ alkyl. In some embodiments, for example, R¹ in the compounds of formulae (I), (II) and (III) is C₁₂₋₃₀ alkyl or, for instance, C₁₂₋₂₀ alkyl.

The compounds which comprise a hydrocarbyl group which has at least 12 carbon atoms may also be compounds of formulae (IV), (V), (VI) and (VII) in which at least one of the hydrocarbyl groups R² and R³ has at least 12 carbon atoms.

Thus, one or both of the hydrocarbyl groups R² and R³ in the compounds of formulae (IV), (V), (VI) and (VII) may be as further defined above for the hydrocarbyl group that has at least 12 carbon atoms.

For instance, one of the hydrocarbyl groups R² and R³ may be as further defined above for the hydrocarbyl group that has at least 12 carbon atoms, and the other of R² and R³ may be as defined hereinbefore more generally for R² and R³. Thus, the other of R² and R³ may for instance be a C₁₋₁₅₀ hydrocarbyl, or, for instance, a C₁₋₅₀ hydrocarbyl, such as, for instance, a C₁₋₄₀ hydrocarbyl, or more typically a C₁₋₃₀ hydrocarbyl, such as for instance a C₁₋₂₀ hydrocarbyl or a C₁₋₁₀ hydrocarbyl.

Typically, however, one of the hydrocarbyl groups R² and R³ in the compounds of formulae (IV), (V), (VI) and (VII) is C₁₂₋₆₀ hydrocarbyl, and the other of R² and R³ is C₁₋₆₀ hydrocarbyl. Thus, for example, one of R² and R³ may be C₁₂₋₅₀ hydrocarbyl, and the other of R² and R³ may be a C₁₋₅₀ hydrocarbyl. Often, for instance, one of R² and R³ is a C₁₂₋₄₀ hydrocarbyl, and the other of R² and R³ is a C₁₋₄₀ hydrocarbyl. In some embodiments, for example, one of R² and R³ is C₁₂₋₃₀ hydrocarbyl, and the other of R² and R³ is C₁₋₃₀ hydrocarbyl, or, for instance, one of R² and R³ may be C₁₂₋₂₀ hydrocarbyl, and the other of R² and R³ may be C₁₋₂₀ hydrocarbyl or for instance C₁₋₁₀ hydrocarbyl.

Typically, the hydrocarbyls are straight-chained, branched or cyclic, saturated or unsaturated aliphatic hydrocarbyl groups.

Often, for instance, one of the hydrocarbyl groups R² and R³ in the compounds of formulae (IV), (V), (VI) and (VII) is a C₁₂₋₆₀ alkyl or a C₁₂₋₆₀ alkenyl group, and the other of R² and R³ is a C₁₋₆₀ alkyl or a C₁₋₆₀ alkenyl group. Thus, for example, one of R² and R³ may be C₁₂₋₅₀ alkyl or C₁₂₋₅₀ alkenyl, and the other of R² and R³ may be C₁₋₅₀ alkyl or C₁₋₅₀ alkenyl. Often, for instance, one of R² and R³ is C₁₂₋₄₀ alkyl or C₁₂₋₄₀ alkenyl, and the other of R² and R³ is C₁₋₄₀ alkyl or C₁₋₄₀ alkenyl. In some embodiments, for example, one of R² and R³ is C₁₂₋₃₀ alkyl or C₁₂₋₃₀ alkenyl, and the other of R² and R³ is C₁₋₃₀ alkyl or C₁₋₃₀ alkenyl, or, for instance, one of R² and R³ may be C₁₂₋₂₀ alkyl or C₁₂₋₂₀ alkenyl, and the other of R² and R³ may be C₁₋₂₀ alkyl or C₁₋₂₀ alkenyl or for instance C₁₋₁₀ alkyl or C₁₋₁₀ alkenyl.

More typically, one of the hydrocarbyl groups R² and R³ in the compounds of formulae (IV), (V), (VI) and (VII) is a C₁₂₋₆₀ alkyl group, and the other of R² and R³ is a C₁₋₆₀ alkyl group. Thus, for example, one of R² and R³ may be C₁₂₋₅₀ alkyl and the other of R² and R³ may be C₁₋₅₀ alkyl. Often, for instance, one of R² and R³ is C₁₂₋₄₀ alkyl and the other of R² and R³ is C₁₋₄₀ alkyl. In some embodiments, for example, one of R² and R³ is C₁₂₋₃₀ alkyl and the other of R² and R³ is C₁₋₃₀ alkyl, or, for instance, one of R² and R³ may be C₁₂₋₂₀ alkyl and the other of R² and R³ may be C₁₋₂₀ alkyl or, for instance, C₁₋₁₀ alkyl.

The compounds which comprise a hydrocarbyl group which has at least 12 carbon atoms may also be compounds of formula (VIII) in which at least one of the hydrocarbyl groups R⁴, R⁵ and R⁶ has at least 12 carbon atoms.

Thus, one, two or all three of the hydrocarbyl groups R⁴, R⁵ and R⁶ in the compound of formula (VIII) may be as further defined above for the hydrocarbyl group that has at least 12 carbon atoms.

For instance, one of the hydrocarbyl groups R⁴, R⁵ and R⁶ may be as further defined above for the hydrocarbyl group that has at least 12 carbon atoms, and the other two of R⁴, R⁵ and R⁶ may be as defined more generally hereinbefore for R⁴, R⁵ and R⁶. Thus, the other two of R⁴, R⁵ and R⁶ may be C₁₋₁₅₀ hydrocarbyl groups, or, for instance C₁₋₅₀ hydrocarbyl groups, such as, for example, C₁₋₄₀ hydrocarbyl groups, or more typically C₁₋₃₀ hydrocarbyl groups, such as for instance C₁₋₂₀ hydrocarbyl groups or C₁₋₁₀ hydrocarbyl groups.

Typically, however, one of the hydrocarbyl groups R⁴, R⁵ and R⁶ in the compound of formula (VIII) is C₁₂₋₆₀ hydrocarbyl, and the other two of R⁴, R⁵ and R⁶ are C₁₋₆₀ hydrocarbyl. Thus, for example, one of R⁴, R⁵ and R⁶ may be C₁₂₋₅₀ hydrocarbyl, and the other two of R⁴, R⁵ and R⁶ may be C₁₋₅₀ hydrocarbyls. Often, for instance, one of R⁴, R⁵ and R⁶ is a C₁₂₋₄₀ hydrocarbyl, and the other two of R⁴, R⁵ and R⁶ are C₁₋₄₀ hydrocarbyl groups. In some embodiments, for example, one of R⁴, R⁵ and R⁶ is a C₁₂₋₃₀ hydrocarbyl, and the other two of R⁴, R⁵ and R⁶ are C₁₋₃₀ hydrocarbyl groups, or, for instance, one of R⁴, R⁵ and R⁶ may be a C₁₂₋₂₀ hydrocarbyl and the other two of R⁴, R⁵ and R⁶ may be C₁₋₂₀ hydrocarbyl groups or for instance C₁₋₁₀ hydrocarbyl groups. Typically, the hydrocarbyls are straight-chained, branched or cyclic, saturated or unsaturated aliphatic hydrocarbyl groups.

Often, for instance, one of the hydrocarbyl groups R⁴, R⁵ and R⁶ in the compound of formula (VIII) is a C₁₂₋₆₀ alkyl or a C₁₂₋₆₀ alkenyl group, and the other two of R⁴, R⁵ and R⁶ are selected from C₁₋₆₀ alkyl and C₁₋₆₀ alkenyl groups. Thus, for example, one of R⁴, R⁵ and R⁶ may be a C₁₂₋₅₀ alkyl or a C₁₂₋₅₀ alkenyl group, and the other two of R⁴, R⁵ and R⁶ may be selected from C₁₋₅₀ alkyl and C₁₋₅₀ alkenyl groups. Often, for instance, one of R⁴, R⁵ and R⁶ is C₁₂₋₄₀ alkyl or C₁₂₋₄₀ alkenyl, and the other two of R⁴, R⁵ and R⁶ are selected from C₁₋₄₀ alkyl and C₁₋₄₀ alkenyl. In some embodiments, for example, one of R⁴, R⁵ and R⁶ is C₁₂₋₃₀ alkyl or C₁₂₋₃₀ alkenyl, and the other two of R⁴, R⁵ and R⁶ are selected from C₁₋₃₀ alkyl and C₁₋₃₀ alkenyl, or, for instance, one of R⁴, R⁵ and R⁶ may be C₁₂₋₂₀ alkyl or C₁₂₋₂₀ alkenyl, and the other two of R⁴, R⁵ and R⁶ may be selected from C₁₋₂₀ alkyl and C₁₋₂₀ alkenyl or, for instance, from C₁₋₁₀ alkyl and C₁₋₁₀ alkenyl.

More typically, one of the hydrocarbyl groups R⁴, R⁵ and R⁶ in the compound of formula (VIII) a C₁₂₋₆₀ alkyl group, and the other two of R⁴, R⁵ and R⁶ are C₁₋₆₀ alkyl groups. Thus, for example, one of R⁴, R⁵ and R⁶ may be C₁₂₋₅₀ alkyl and the other two of R⁴, R⁵ and R⁶ may be C₁₋₅₀ alkyl groups. Often, for instance, one of R⁴, R⁵ and R⁶ is C₁₂₋₄₀ alkyl and the other two of R⁴, R⁵ and R⁶ are C₁₋₄₀ alkyls. In some embodiments, for example, one of R⁴, R⁵ and R⁶ is C₁₂₋₃₀ alkyl and the other two of R⁴, R⁵ and R⁶ are C₁₋₃₀ alkyl groups, or, for instance, one of R⁴, R⁵ and R⁶ may be C₁₂₋₂₀ alkyl and the other two of R⁴, R⁵ and R⁶ are C₁₋₂₀ alkyl groups or, for instance, C₁₋₁₀ alkyl groups.

Often, the compounds which comprise a hydrocarbyl group which has at least 12 carbon atoms are compounds of formulae (I), (II), (III), (IV), (V), (VI), (VII) and (VIII) wherein: R¹ is a C₁₂₋₁₅₀ hydrocarbyl group; one of R² and R³ is a C₁₂₋₁₅₀ hydrocarbyl group and the other of R² and R³ is a C₁₋₁₅₀ hydrocarbyl group; and one of R⁴, R⁵ and R⁶ is a C₁₂₋₁₅₀ hydrocarbyl group, and the other two of R⁴, R⁵ and R⁶ are C₁₋₁₅₀ hydrocarbyl groups which are the same or different. R¹ to R⁶ may be as further defined above.

It is particularly preferred that the one or more organic compounds are selected from hydrocarbons that have at least 18 carbon atoms, and compounds which comprise one or more hydrocarbyl groups wherein the total number of carbon atoms in the one or more hydrocarbyl groups is at least 18. Such organic compounds are generally solid at SATP and include waxes and hydrocarbon polymers.

The hydrocarbons having at least 18 carbon atoms may, for instance, be C₁₈₋₁₅₀ hydrocarbons and hydrocarbon polymers. The hydrocarbon polymers, may, for instance, be polyolefins, including for example polyethylene, polypropylene, polymethylpentene, polybutene-1, and including for instance polyolefin elastomers, such as, for example, polyisobutylene, ethylene propylene rubber, and ethylene propylene diene monomer (M-class) rubber. The hydrocarbon polymers may, for example, be hydrocarbon polymers which have a molecular weight of at least 1,800 Da (lower molecular weights than this being covered by the term "C₁₈₋₁₅₀ hydrocarbons"). Often, the hydrocarbons having at least 18 carbon atoms are C₁₈₋₁₅₀ hydrocarbons. More typically, they are C₁₈₋₁₀₀ hydrocarbons. For instance, they may be C₁₈₋₈₀ hydrocarbons, or for instance, C₁₈₋₆₀ hydrocarbons. They may for example be C₁₈₋₅₀ hydrocarbons. Often, for instance, they are C₁₈₋₄₀ hydrocarbons.

The hydrocarbons having at least 18 carbon atoms are typically straight-chained, branched or cyclic, saturated or unsaturated aliphatic hydrocarbon compounds having at least 18 carbon atoms. The hydrocarbons are typically therefore alkanes having at least 18 carbon atoms (such as for instance paraffin waxes and polyolefins), cycloalkanes having at least 18 carbon atoms, alkenes having at least 18 carbon atoms and cycloalkenes having at least 18 carbon atoms. They may for instance be straight-chained, branched or cyclic, saturated aliphatic hydrocarbon compounds having at least 18 carbon atoms. Often, the hydrocarbons having at least 18 carbon atoms from which the at least one organic compound may be selected are alkanes having at least 18 carbon atoms or alkenes having at least 18 carbon atoms. Typically, they are alkanes having at least 18 carbon atoms.

Thus, the hydrocarbons from which the at least one organic compound is selected are typically straight-chained, branched or cyclic, saturated or unsaturated aliphatic C₁₈₋₁₅₀ hydrocarbons. They may however be straight-chained, branched or cyclic, saturated or unsaturated aliphatic C₁₈₋₁₀₀ hydrocarbons, or for instance straight-chained, branched or cyclic, saturated or unsaturated aliphatic C₁₈₋₈₀ hydrocarbons. In one embodiment, they are straight-chained, branched or cyclic, saturated or unsaturated aliphatic C₁₈₋₆₀ hydrocarbons. They may for example be straight-chained, branched or cyclic, saturated or unsaturated aliphatic C₁₈₋₅₀ hydrocarbons. Often, for instance, they are straight-chained, branched or cyclic, saturated or unsaturated aliphatic C₁₈₋₄₀ hydrocarbons.

The hydrocarbons from which the at least one organic compound is selected may for instance be C₁₈₋₁₅₀ alkanes and C₁₈₋₁₅₀ alkenes. Thus, they may be C₁₈₋₁₀₀ alkanes and C₁₈₋₁₀₀ alkenes, or for instance C₁₈₋₈₀ alkanes and C₁₈₋₈₀ alkenes. In one embodiment, they are C₁₈₋₆₀ alkanes and C₁₈₋₆₀ alkenes. They may for example be C₁₈₋₅₀ alkanes and C₁₈₋₅₀ alkenes. Often, for instance, they are C₁₈₋₄₀ alkanes and C₁₈₋₄₀ alkenes.

More typically, the hydrocarbons from which the at least one organic compound is selected are C₁₈₋₁₅₀ alkanes. They may for instance be C₁₈₋₁₀₀ alkanes, or for instance C₁₈₋₈₀ alkanes. In one embodiment, they are C₁₈₋₆₀ alkanes. They may for example be C₁₈₋₅₀ alkanes. Often, for instance, they are C₁₈₋₄₀ alkanes.

The compounds which comprise one or more hydrocarbyl groups wherein the total number of carbon atoms in the one or more hydrocarbyl groups is at least 18 may for instance be compounds in which one or more hydrocarbyl groups are bonded to a group containing an oxygen atom.

Thus, often, the compounds which comprise one or more hydrocarbyl groups wherein the total number of carbon atoms in the one or more hydrocarbyl groups is at least 18 are compounds of formulae (I), (II), (III), (IV), (V), (VI), (VII) and (VIII) as defined herein, wherein the total number of carbon atoms in the one or more hydrocarbyl groups is at least 18.

When there is only one hydrocarbyl group in the compound, for instance in the cases of compounds of formulae (I), (II) and (III), the hydrocarbyl group in the compound will of course have at least 18 carbon atoms.

The compounds which comprise one or more hydrocarbyl groups wherein the total number of carbon atoms in the one or more hydrocarbyl groups is at least 18 may therefore be compounds of formulae (I), (II) and (III) in which the hydrocarbyl group R¹ is a hydrocarbyl group that has at least 18 carbon atoms.

R¹ in the compounds of formulae (I), (II) and (III) may therefore be a C₁₈₋₁₅₀ hydrocarbyl group. It may for instance be C₁₈₋₁₀₀ hydrocarbyl, or for instance C₁₈₋₈₀ hydrocarbyl. In one embodiment, it is C₁₈₋₆₀ hydrocarbyl. R¹ in the compounds of formulae (I), (II) and (III) may for example be a C₁₈₋₅₀ hydrocarbyl group. Often, for instance, it is C₁₈₋₄₀ hydrocarbyl. In some embodiments, for example it is C₁₈₋₃₀ hydrocarbyl.

The hydrocarbyl group is typically a straight-chained, branched or cyclic, saturated or unsaturated aliphatic hydrocarbyl group having at least 18 carbon atoms.

R¹ in the compounds of formulae (I), (II) and (III) may therefore be a straight-chained, branched or cyclic, saturated or unsaturated aliphatic C₁₈₋₁₅₀ hydrocarbyl. It may for instance be a straight-chained, branched or cyclic, saturated or unsaturated aliphatic C₁₈₋₁₀₀ hydrocarbyl, or for instance a straight-chained, branched or cyclic, saturated or unsaturated aliphatic C₁₈₋₈₀ hydrocarbyl. In one embodiment, it is a straight-chained, branched or cyclic, saturated or unsaturated aliphatic C₁₈₋₆₀ hydrocarbyl. It may for example be a straight-chained, branched or cyclic, saturated or unsaturated aliphatic C₁₈₋₅₀ hydrocarbyl. Often, for instance, it is a straight-chained, branched or cyclic, saturated or unsaturated aliphatic C₁₈₋₄₀ hydrocarbyl. In some embodiments, for example it is a straight-chained, branched or cyclic, saturated or unsaturated aliphatic C₁₈₋₃₀ hydrocarbyl.

R¹ in the compounds of formulae (I), (II) and (III) may for instance be C₁₈₋₁₅₀ alkyl or C₁₈₋₁₅₀ alkenyl. Thus, it may be C₁₈₋₁₀₀ alkyl or C₁₈₋₁₀₀ alkenyl, or for instance C₁₈₋₈₀ alkyl or C₁₈₋₈₀ alkenyl. In one embodiment, it is a C₁₈₋₆₀ alkyl or a C₁₈₋₆₀ alkenyl group. It may for example be C₁₈₋₅₀ alkyl or C₁₈₋₅₀ alkenyl. Often, for instance, it is C₁₈₋₄₀ alkyl or C₁₈₋₄₀ alkenyl. In some embodiments, for example it is C₁₈₋₃₀ alkyl or C₁₈₋₃₀ alkenyl.

More typically, R¹ in the compounds of formulae (I), (II) and (III) is a C₁₈₋₁₅₀ alkyl group. It may for instance be C₁₈₋₁₀₀ alkyl, or for instance C₁₈₋₈₀ alkyl. In one embodiment, it is a C₁₈₋₆₀ alkyl group. It may for example be C₁₈₋₅₀ alkyl. Often, for instance, it is C₁₈₋₄₀ alkyl. In some embodiments, for example it is C₁₈₋₃₀ alkyl.

When there is more than one hydrocarbyl group, for instance in the cases of compounds of formulae (IV) to (VIII), typically at least one of the hydrocarbyl groups in the compound has at least 8 carbon atoms. Often, for instance, at least one of the hydrocarbyl groups in the compound has at least 12 carbon atoms. This is provided, of course, that the total number of carbon atoms in the one or more hydrocarbyl groups is at least 18. In some embodiments, at least one of the hydrocarbyl groups in the compound has at least 18 carbon atoms.

The compounds which comprise one or more hydrocarbyl groups wherein the total number of carbon atoms in the one or more hydrocarbyl groups is at least 18 may therefore be compounds of formulae (I), (II) and (III) in which the hydrocarbyl group R¹ has at least 18 carbon atoms, compounds of formulae (IV), (V), (VI) and (VII) in which at least one of the hydrocarbyl groups R² and R³ has at least 8 carbon atoms (or, for instance, at least 12 carbon atoms, or, for instance, at least 18 carbon atoms), and compounds of formula (VIII) in which at least one of the hydrocarbyl groups R⁴, R⁵ and R⁶ has at least 8 carbon atoms (or, for instance, at least 12 carbon atoms, or, for instance, at least 18 carbon atoms). This is, in each case, provided, of course, that the total number of carbon atoms in the one or more hydrocarbyl groups is at least 18.

The above-defined hydrocarbyl groups in these compounds which have at least 8 carbon atoms, at least 12 carbon atoms, and at least 18 carbon atoms, may be as further defined hereinbefore for hydrocarbyl groups which have at least 8 carbon atoms, at least 12 carbon atoms, and at least 18 carbon atoms, respectively.

Thus, the compounds which comprise one or more hydrocarbyl groups wherein the total number of carbon atoms in the one or more hydrocarbyl groups is at least 18, may also therefore be compounds of formulae (IV), (V), (VI) and (VII) in which at least one of the hydrocarbyl groups R² and R³ is a hydrocarbyl group that has at least 8 carbon atoms, provided that the total number of carbon atoms in R² and R³ is at least 18.

Thus, one or both of the hydrocarbyl groups R² and R³ in the compounds of formulae (IV), (V), (VI) and (VII) may be as further defined above for the hydrocarbyl group that has at least 8 carbon atoms provided that the total number of carbon atoms in R² and R³ is at least 18.

For instance, one of the hydrocarbyl groups R² and R³ may be as further defined above for the hydrocarbyl group that has at least 8 carbon atoms, and the other of R² and R³ may be as defined hereinbefore more generally for R² and R³. Thus, the other of R² and R³ may for instance be a C₁₋₁₅₀ hydrocarbyl, or, for instance, a C₁₋₅₀ hydrocarbyl, such as, for instance, a C₁₋₄₀ hydrocarbyl, or more typically a C₁₋₃₀ hydrocarbyl, such as for instance a C₁₋₂₀ hydrocarbyl or a C₁₋₁₀ hydrocarbyl, provided of course that the total number of carbon atoms in R² and R³ is at least 18.

Typically, however, one of the hydrocarbyl groups R² and R³ in the compounds of formulae (IV), (V), (VI) and (VII) is C₈₋₆₀ hydrocarbyl, and the other of R² and R³ is C₁₋₆₀ hydrocarbyl, provided that the total number of carbon atoms in R² and R³ is at least 18. Thus, for example, one of R² and R³ may be C₈₋₅₀ hydrocarbyl, and the other of R² and R³ may be a C₁₋₅₀ hydrocarbyl, provided that the total number of carbon atoms in R² and R³ is at least 18. Often, for instance, one of R² and R³ is a C₈₋₄₀ hydrocarbyl, and the other of R² and R³ is a C₁₋₄₀ hydrocarbyl, provided that the total number of carbon atoms in R² and R³ is at least 18. In some embodiments, for example, one of R² and R³ is C₈₋₃₀ hydrocarbyl, and the other of R² and R³ is C₁₋₃₀ hydrocarbyl, or, for instance, one of R² and R³ may be C₈₋₂₀ hydrocarbyl, and the other of R² and R³ may be C₁₋₂₀ hydrocarbyl or for instance C₁₋₁₀ hydrocarbyl, provided in each case that the total number of carbon atoms in R² and R³ is at least 18.

Typically, the hydrocarbyls are straight-chained, branched or cyclic, saturated or unsaturated aliphatic hydrocarbyl groups.

Often, for instance, one of the hydrocarbyl groups R² and R³ in the compounds of formulae (IV), (V), (VI) and (VII) is a C₈₋₆₀ alkyl or a C₈₋₆₀ alkenyl group, and the other of R² and R³ is a C₁₋₆₀ alkyl or a C₁₋₆₀ alkenyl group, provided that the total number of carbon atoms in R² and R³ is at least 18. Thus, for example, one of R² and R³ may be C₈₋₅₀ alkyl or C₈₋₅₀ alkenyl, and the other of R² and R³ may be C₁₋₅₀ alkyl or C₁₋₅₀ alkenyl, provided that the total number of carbon atoms in R² and R³ is at least 18. Often, for instance, one of R² and R³ is C₈₋₄₀ alkyl or C₈₋₄₀ alkenyl, and the other of R² and R³ is C₁₋₄₀ alkyl or C₁₋₄₀ alkenyl, provided that the total number of carbon atoms in R² and R³ is at least 18. In some embodiments, for example, one of R² and R³ is C₈₋₃₀ alkyl or C₈₋₃₀ alkenyl, and the other of R² and R³ is C₁₋₃₀ alkyl or C₁₋₃₀ alkenyl, or, for instance, one of R² and R³ may be C₈₋₂₀ alkyl or C₈₋₂₀ alkenyl, and the other of R² and R³ may be C₁₋₂₀ alkyl or C₁₋₂₀ alkenyl or for instance C₁₋₁₀ alkyl or C₁₋₁₀ alkenyl, provided in each case that the total number of carbon atoms in R² and R³ is at least 18.

More typically, one of the hydrocarbyl groups R² and R³ in the compounds of formulae (IV), (V), (VI) and (VII) is a C₈₋₆₀ alkyl group, and the other of R² and R³ is a C₁₋₆₀ alkyl group, provided that the total number of carbon atoms in R² and R³ is at least 18. Thus, for example, one of R² and R³ may be C₈₋₅₀ alkyl and the other of R² and R³ may be C₁₋₅₀ alkyl, provided that the total number of carbon atoms in R² and R³ is at least 18. Often, for instance, one of R² and R³ is C₈₋₄₀ alkyl and the other of R² and R³ is C₁₋₄₀ alkyl, provided that the total number of carbon atoms in R² and R³ is at least 18. In some embodiments, for example, one of R² and R³ is C₈₋₃₀ alkyl and the other of R² and R³ is C₁₋₃₀ alkyl, or, for instance, one of R² and R³ may be C₈₋₂₀ alkyl and the other of R² and R³ may be C₁₋₂₀ alkyl or, for instance, C₁₋₁₀ alkyl, provided in each case that the total number of carbon atoms in R² and R³ is at least 18.

Often, in the compounds of formulae (IV), (V), (VI) and (VII), at least one of the hydrocarbyl groups R² and R³ is a hydrocarbyl group that has at least 12 carbon atoms, provided that the total number of carbon atoms in R² and R³ is at least 18.

Thus, one or both of the hydrocarbyl groups R² and R³ in the compounds of formulae (IV), (V), (VI) and (VII) may be as further defined above for the hydrocarbyl group that has at least 12 carbon atoms provided that the total number of carbon atoms in R² and R³ is at least 18.

For instance, one of the hydrocarbyl groups R² and R³ may be as further defined above for the hydrocarbyl group that has at least 12 carbon atoms, and the other of R² and R³ may be as defined hereinbefore more generally for R² and R³. Thus, the other of R² and R³ may for instance be a C₁₋₁₅₀ hydrocarbyl, or, for instance, a C₁₋₅₀ hydrocarbyl, such as, for instance, a C₁₋₄₀ hydrocarbyl, or more typically a C₁₋₃₀ hydrocarbyl, such as for instance a C₁₋₂₀ hydrocarbyl or a C₁₋₁₀ hydrocarbyl, provided of course that the total number of carbon atoms in R² and R³ is at least 18.

Typically, however, one of the hydrocarbyl groups R² and R³ in the compounds of formulae (IV), (V), (VI) and (VII) is C₁₂₋₆₀ hydrocarbyl, and the other of R² and R³ is C₁₋₆₀ hydrocarbyl, provided that the total number of carbon atoms in R² and R³ is at least 18. Thus, for example, one of R² and R³ may be C₁₂₋₅₀ hydrocarbyl, and the other of R² and R³ may be a C₁₋₅₀ hydrocarbyl, provided that the total number of carbon atoms in R² and R³ is at least 18. Often, for instance, one of R² and R³ is a C₁₂₋₄₀ hydrocarbyl, and the other of R² and R³ is a C₁₋₄₀ hydrocarbyl, provided that the total number of carbon atoms in R² and R³ is at least 18. In some embodiments, for example, one of R² and R³ is C₁₂₋₃₀ hydrocarbyl, and the other of R² and R³ is C₁₋₃₀ hydrocarbyl, or, for instance, one of R² and R³ may be C₁₂₋₂₀ hydrocarbyl, and the other of R² and R³ may be C₁₋₂₀ hydrocarbyl or for instance C₁₋₁₀ hydrocarbyl, provided in each case that the total number of carbon atoms in R² and R³ is at least 18.

Typically, the hydrocarbyls are straight-chained, branched or cyclic, saturated or unsaturated aliphatic hydrocarbyl groups.

Often, for instance, one of the hydrocarbyl groups R² and R³ in the compounds of formulae (IV), (V), (VI) and (VII) is a C₁₂₋₆₀ alkyl or a C₁₂₋₆₀ alkenyl group, and the other of R² and R³ is a C₁₋₆₀ alkyl or a C₁₋₆₀ alkenyl group, provided that the total number of carbon atoms in R² and R³ is at least 18. Thus, for example, one of R² and R³ may be C₁₂₋₅₀ alkyl or C₁₂₋₅₀ alkenyl, and the other of R² and R³ may be C₁₋₅₀ alkyl or C₁₋₅₀ alkenyl, provided that the total number of carbon atoms in R² and R³ is at least 18. Often, for instance, one of R² and R³ is C₁₂₋₄₀ alkyl or C₁₂₋₄₀ alkenyl, and the other of R² and R³ is C₁₋₄₀ alkyl or C₁₋₄₀ alkenyl, provided that the total number of carbon atoms in R² and R³ is at least 18. In some embodiments, for example, one of R² and R³ is C₁₂₋₃₀ alkyl or C₁₂₋₃₀ alkenyl, and the other of R² and R³ is C₁₋₃₀ alkyl or C₁₋₃₀ alkenyl, or, for instance, one of R² and R³ may be C₁₂₋₂₀ alkyl or C₁₂₋₂₀ alkenyl, and the other of R² and R³ may be C₁₋₂₀ alkyl or C₁₋₂₀ alkenyl or for instance C₁₋₁₀ alkyl or C₁₋₁₀ alkenyl, provided in each case that the total number of carbon atoms in R² and R³ is at least 18.

More typically, one of the hydrocarbyl groups R² and R³ in the compounds of formulae (IV), (V), (VI) and (VII) is a C₁₂₋₆₀ alkyl group, and the other of R² and R³ is a C₁₋₆₀ alkyl group, provided that the total number of carbon atoms in R² and R³ is at least 18. Thus, for example, one of R² and R³ may be C₁₂₋₅₀ alkyl and the other of R² and R³ may be C₁₋₅₀ alkyl, provided that the total number of carbon atoms in R² and R³ is at least 18. Often, for instance, one of R² and R³ is C₁₂₋₄₀ alkyl and the other of R² and R³ is C₁₋₄₀ alkyl, provided that the total number of carbon atoms in R² and R³ is at least 18. In some embodiments, for example, one of R² and R³ is C₁₂₋₃₀ alkyl and the other of R² and R³ is C₁₋₃₀ alkyl, or, for instance, one of R² and R³ may be C₁₂₋₂₀ alkyl and the other of R² and R³ may be C₁₋₂₀ alkyl or, for instance, C₁₋₁₀ alkyl, provided in each case that the total number of carbon atoms in R² and R³ is at least 18.

In some embodiments, in the compounds of formulae (IV), (V), (VI) and (VII), at least one of the hydrocarbyl groups R² and R³ is a hydrocarbyl group that has at least 18 carbon atoms. Thus, one or both of the hydrocarbyl groups R² and R³ may be a C₁₈₋₁₅₀ hydrocarbyl group. One or both of R² and R³ may for instance be C₁₈₋₁₀₀ hydrocarbyl, or for instance C₁₈₋₈₀ hydrocarbyl. In one embodiment, one or both of the hydrocarbyl groups R² and R³ is C₁₈₋₆₀ hydrocarbyl. One or both of the hydrocarbyl groups R² and R³ in the compounds of formulae (I), (II) and (III) may for example be C₁₈₋₅₀ hydrocarbyl. Often, for instance, one or both of R² and R³ is C₁₈₋₄₀ hydrocarbyl. In some embodiments, for example one or both of R² and R³ is C₁₈₋₃₀ hydrocarbyl. When only one of R² and R³ is such a hydrocarbyl group that has at least 18 carbon atoms, the other one of R² and R³ may be as defined hereinbefore more generally for R² and R³. Thus, the other of R² and R³ may for instance be a C₁₋₁₅₀ hydrocarbyl, or, for instance, a C₁₋₅₀ hydrocarbyl, such as, for instance, a C₁₋₄₀ hydrocarbyl, or more typically a C₁₋₃₀ hydrocarbyl, such as for instance a C₁₋₂₀ hydrocarbyl or a C₁₋₁₀ hydrocarbyl.

Typically, however, one of the hydrocarbyl groups R² and R³ in the compounds of formulae (IV), (V), (VI) and (VII) is C₁₈₋₆₀ hydrocarbyl, and the other of R² and R³ is C₁₋₆₀ hydrocarbyl. Thus, for example, one of R² and R³ may be C₁₈₋₅₀ hydrocarbyl, and the other of R² and R³ may be a C₁₋₅₀ hydrocarbyl. Often, for instance, one of R² and R³ is a C₁₈₋₄₀ hydrocarbyl, and the other of R² and R³ is a C₁₋₄₀ hydrocarbyl. In some embodiments, for example, one of R² and R³ is C₁₈₋₃₀ hydrocarbyl, and the other of R² and R³ is C₁₋₃₀ hydrocarbyl, or, for instance, one of R² and R³ may be C₁₈₋₂₀ hydrocarbyl, and the other of R² and R³ may be C₁₋₂₀ hydrocarbyl or for instance C₁₋₁₀ hydrocarbyl.

Typically, the hydrocarbyls are straight-chained, branched or cyclic, saturated or unsaturated aliphatic hydrocarbyl groups.

Often, for instance, one of the hydrocarbyl groups R² and R³ in the compounds of formulae (IV), (V), (VI) and (VII) is a C₁₈₋₆₀ alkyl or a C₁₈₋₆₀ alkenyl group, and the other of R² and R³ is a C₁₋₆₀ alkyl or a C₁₋₆₀ alkenyl group. Thus, for example, one of R² and R³ may be C₁₈₋₅₀ alkyl or C₁₈₋₅₀ alkenyl, and the other of R² and R³ may be C₁₋₅₀ alkyl or C₁₋₅₀ alkenyl. Often, for instance, one of R² and R³ is C₁₈₋₄₀ alkyl or C₁₈₋₄₀ alkenyl, and the other of R² and R³ is C₁₋₄₀ alkyl or C₁₋₄₀ alkenyl. In some embodiments, for example, one of R² and R³ is C₁₈₋₃₀ alkyl or C₁₈₋₃₀ alkenyl, and the other of R² and R³ is C₁₋₃₀ alkyl or C₁₋₃₀ alkenyl, or, for instance, one of R² and R³ may be C₁₈₋₂₀ alkyl or C₁₈₋₂₀ alkenyl, and the other of R² and R³ may be C₁₋₂₀ alkyl or C₁₋₂₀ alkenyl or for instance C₁₋₁₀ alkyl or C₁₋₁₀ alkenyl.

More typically, one of the hydrocarbyl groups R² and R³ in the compounds of formulae (IV), (V), (VI) and (VII) is a C₁₈₋₆₀ alkyl group, and the other of R² and R³ is a C₁₋₆₀ alkyl group. Thus, for example, one of R² and R³ may be C₁₈₋₅₀ alkyl and the other of R² and R³ may be C₁₋₅₀ alkyl. Often, for instance, one of R² and R³ is C₁₈₋₄₀ alkyl and the other of R² and R³ is C₁₋₄₀ alkyl. In some embodiments, for example, one of R² and R³ is C₁₈₋₃₀ alkyl and the other of R² and R³ is C₁₋₃₀ alkyl, or, for instance, one of R² and R³ may be C₁₈₋₂₀ alkyl and the other of R² and R³ may be C₁₋₂₀ alkyl or, for instance, C₁₋₁₀ alkyl.

The compounds which comprise one or more hydrocarbyl groups wherein the total number of carbon atoms in the one or more hydrocarbyl groups is at least 18, may also be compounds of formula (VIII) in which at least one of the hydrocarbyl groups R⁴, R⁵ and R⁶ is a hydrocarbyl group that has at least 8 carbon atoms, provided that the total number of carbon atoms in R⁴, R⁵ and R⁶ is at least 18.

Thus, one, two, or all three, of the hydrocarbyl groups R⁴, R⁵ and R⁶ in the compound of formula (VIII) may be as further defined above for the hydrocarbyl group that has at least 8 carbon atoms provided that the total number of carbon atoms in R⁴, R⁵ and R⁶ is at least 18.

For instance, one of the hydrocarbyl groups R⁴, R⁵ and R⁶ may be as further defined above for the hydrocarbyl group that has at least 8 carbon atoms, and the other two of R⁴, R⁵ and R⁶ may be as defined hereinbefore more generally for R⁴, R⁵ and R⁶, provided that the total number of carbon atoms in R⁴, R⁵ and R⁶ is at least 18. Thus, the other two of R⁴, R⁵ and R⁶ may for instance be a C₁₋₁₅₀ hydrocarbyl, or, for instance, a C₁₋₅₀ hydrocarbyl, such as, for instance, a C₁₋₄₀ hydrocarbyl, or more typically a C₁₋₃₀ hydrocarbyl, such as for instance a C₁₋₂₀ hydrocarbyl or a C₁₋₁₀ hydrocarbyl, provided of course that the total number of carbon atoms in R⁴, R⁵ and R⁶ is at least 18.

Typically, however, one of the hydrocarbyl groups R⁴, R⁵ and R⁶ in the compound of formula (VIII) is C₈₋₆₀ hydrocarbyl, and the other two of R⁴, R⁵ and R⁶ are C₁₋₆₀ hydrocarbyl, provided that the total number of carbon atoms in R⁴, R⁵ and R⁶ is at least 18. Thus, for example, one of R⁴, R⁵ and R⁶ may be C₈₋₅₀ hydrocarbyl, and the other two of R⁴, R⁵ and R⁶ may be C₁₋₅₀ hydrocarbyls, provided that the total number of carbon atoms in R⁴, R⁵ and R⁶ is at least 18. Often, for instance, one of R⁴, R⁵ and R⁶ is a C₈₋₄₀ hydrocarbyl, and the other two of R⁴, R⁵ and R⁶ are C₁₋₄₀ hydrocarbyl groups, provided that the total number of carbon atoms in R⁴, R⁵ and R⁶ is at least 18. In some embodiments, for example, one of R⁴, R⁵ and R⁶ is a C₈₋₃₀ hydrocarbyl, and the other two of R⁴, R⁵ and R⁶ are C₁₋₃₀ hydrocarbyl groups, or, for instance, one of R⁴, R⁵ and R⁶ may be a C₈₋₂₀ hydrocarbyl and the other two of R⁴, R⁵ and R⁶ may be C₁₋₂₀ hydrocarbyl groups or for instance C₁₋₁₀ hydrocarbyl groups, provided in each case that the total number of carbon atoms in R⁴, R⁵ and R⁶ is at least 18. Typically, the hydrocarbyls are straight-chained, branched or cyclic, saturated or unsaturated aliphatic hydrocarbyl groups.

Often, for instance, one of the hydrocarbyl groups R⁴, R⁵ and R⁶ in the compound of formula (VIII) is a C₈₋₆₀ alkyl or a C₈₋₆₀ alkenyl group, and the other two of R⁴, R⁵ and R⁶ are selected from C₁₋₆₀ alkyl and C₁₋₆₀ alkenyl groups, provided that the total number of carbon atoms in R⁴, R⁵ and R⁶ is at least 18. Thus, for example, one of R⁴, R⁵ and R⁶ may be a C₈₋₅₀ alkyl or a C₈₋₅₀ alkenyl group, and the other two of R⁴, R⁵ and R⁶ may be selected from C₁₋₅₀ alkyl and C₁₋₅₀ alkenyl groups, provided that the total number of carbon atoms in R⁴, R⁵ and R⁶ is at least 18. Often, for instance, one of R⁴, R⁵ and R⁶ is C₈₋₄₀ alkyl or C₈₋₄₀ alkenyl, and the other two of R⁴, R⁵ and R⁶ are selected from C₁₋₄₀ alkyl and C₁₋₄₀ alkenyl, provided that the total number of carbon atoms in R⁴, R⁵ and R⁶ is at least 18. In some embodiments, for example, one of R⁴, R⁵ and R⁶ is C₈₋₃₀ alkyl or C₈₋₃₀ alkenyl, and the other two of R⁴, R⁵ and R⁶ are selected from C₁₋₃₀ alkyl and C₁₋₃₀ alkenyl, or, for instance, one of R⁴, R⁵ and R⁶ may be C₈₋₂₀ alkyl or C₈₋₂₀ alkenyl, and the other two of R⁴, R⁵ and R⁶ may be selected from C₁₋₂₀ alkyl and C₁₋₂₀ alkenyl or, for instance, from C₁₋₁₀ alkyl and C₁₋₁₀ alkenyl, provided in each case that the total number of carbon atoms in R⁴, R⁵ and R⁶ is at least 18.

More typically, one of the hydrocarbyl groups R⁴, R⁵ and R⁶ in the compound of formula (VIII) is a C₈₋₆₀ alkyl group, and the other two of R⁴, R⁵ and R⁶ are C₁₋₆₀ alkyl groups, provided that the total number of carbon atoms in R⁴, R⁵ and R⁶ is at least 18. Thus, for example, one of R⁴, R⁵ and R⁶ may be C₈₋₅₀ alkyl and the other two of R⁴, R⁵ and R⁶ may be C₁₋₅₀ alkyl groups, provided that the total number of carbon atoms in R⁴, R⁵ and R⁶ is at least 18. Often, for instance, one of R⁴, R⁵ and R⁶ is C₈₋₄₀ alkyl and the other two of R⁴, R⁵ and R⁶ are C₁₋₄₀ alkyls, provided that the total number of carbon atoms in R⁴, R⁵ and R⁶ is at least 18. In some embodiments, for example, one of R⁴, R⁵ and R⁶ is C₈₋₃₀ alkyl and the other two of R⁴, R⁵ and R⁶ are C₁₋₃₀ alkyl groups, or, for instance, one of R⁴, R⁵ and R⁶ may be C₈₋₂₀ alkyl and the other two of R⁴, R⁵ and R⁶ are C₁₋₂₀ alkyl groups or, for instance, C₁₋₁₀ alkyl groups, provided in each case that the total number of carbon atoms in R⁴, R⁵ and R⁶ is at least 18.

Often, the compounds which comprise one or more hydrocarbyl groups wherein the total number of carbon atoms in the one or more hydrocarbyl groups is at least 18, are compounds of formula (VIII) in which at least one of the hydrocarbyl groups R⁴, R⁵ and R⁶ is a hydrocarbyl group that has at least 12 carbon atoms, provided that the total number of carbon atoms in R⁴, R⁵ and R⁶ is at least 18.

Thus, one, two, or all three, of the hydrocarbyl groups R⁴, R⁵ and R⁶ in the compound of formula (VIII) may be as further defined above for the hydrocarbyl group that has at least 12 carbon atoms provided that the total number of carbon atoms in R⁴, R⁵ and R⁶ is at least 18.

For instance, one of the hydrocarbyl groups R⁴, R⁵ and R⁶ may be as further defined above for the hydrocarbyl group that has at least 12 carbon atoms, and the other two of R⁴, R⁵ and R⁶ may be as defined hereinbefore more generally for R⁴, R⁵ and R⁶, provided that the total number of carbon atoms in R⁴, R⁵ and R⁶ is at least 18. Thus, the other two of R⁴, R⁵ and R⁶ may for instance be a C₁₋₁₅₀ hydrocarbyl, or, for instance, a C₁₋₅₀ hydrocarbyl, such as, for instance, a C₁₋₄₀ hydrocarbyl, or more typically a C₁₋₃₀ hydrocarbyl, such as for instance a C₁₋₂₀ hydrocarbyl or a C₁₋₁₀ hydrocarbyl, provided of course that the total number of carbon atoms in R⁴, R⁵ and R⁶ is at least 18.

Typically, however, one of the hydrocarbyl groups R⁴, R⁵ and R⁶ in the compound of formula (VIII) is C₁₂₋₆₀ hydrocarbyl, and the other two of R⁴, R⁵ and R⁶ are C₁₋₆₀ hydrocarbyl, provided that the total number of carbon atoms in R⁴, R⁵ and R⁶ is at least 18. Thus, for example, one of R⁴, R⁵ and R⁶ may be C₁₂₋₅₀ hydrocarbyl, and the other two of R⁴, R⁵ and R⁶ may be C₁₋₅₀ hydrocarbyls, provided that the total number of carbon atoms in R⁴, R⁵ and R⁶ is at least 18. Often, for instance, one of R⁴, R⁵ and R⁶ is a C₁₂₋₄₀ hydrocarbyl, and the other two of R⁴, R⁵ and R⁶ are C₁₋₄₀ hydrocarbyl groups, provided that the total number of carbon atoms in R⁴, R⁵ and R⁶ is at least 18. In some embodiments, for example, one of R⁴, R⁵ and R⁶ is a C₁₂₋₃₀ hydrocarbyl, and the other two of R⁴, R⁵ and R⁶ are C₁₋₃₀ hydrocarbyl groups, or, for instance, one of R⁴, R⁵ and R⁶ may be a C₁₂₋₂₀ hydrocarbyl and the other two of R⁴, R⁵ and R⁶ may be C₁₋₂₀ hydrocarbyl groups or for instance C₁₋₁₀ hydrocarbyl groups, provided in each case that the total number of carbon atoms in R⁴, R⁵ and R⁶ is at least 18. Typically, the hydrocarbyls are straight-chained, branched or cyclic, saturated or unsaturated aliphatic hydrocarbyl groups.

Often, for instance, one of the hydrocarbyl groups R⁴, R⁵ and R⁶ in the compound of formula (VIII) is a C₁₂₋₆₀ alkyl or a C₁₂₋₆₀ alkenyl group, and the other two of R⁴, R⁵ and R⁶ are selected from C₁₋₆₀ alkyl and C₁₋₆₀ alkenyl groups, provided that the total number of carbon atoms in R⁴, R⁵ and R⁶ is at least 18. Thus, for example, one of R⁴, R⁵ and R⁶ may be a C₁₂₋₅₀ alkyl or a C₁₂₋₅₀ alkenyl group, and the other two of R⁴, R⁵ and R⁶ may be selected from C₁₋₅₀ alkyl and C₁₋₅₀ alkenyl groups, provided that the total number of carbon atoms in R⁴, R⁵ and R⁶ is at least 18. Often, for instance, one of R⁴, R⁵ and R⁶ is C₁₂₋₄₀ alkyl or C₁₂₋₄₀ alkenyl, and the other two of R⁴, R⁵ and R⁶ are selected from C₁₋₄₀ alkyl and C₁₋₄₀ alkenyl, provided that the total number of carbon atoms in R⁴, R⁵ and R⁶ is at least 18. In some embodiments, for example, one of R⁴, R⁵ and R⁶ is C₁₂₋₃₀ alkyl or C₁₂₋₃₀ alkenyl, and the other two of R⁴, R⁵ and R⁶ are selected from C₁₋₃₀ alkyl and C₁₋₃₀ alkenyl, or, for instance, one of R⁴, R⁵ and R⁶ may be C₁₂₋₂₀ alkyl or C₁₂₋₂₀ alkenyl, and the other two of R⁴, R⁵ and R⁶ may be selected from C₁₋₂₀ alkyl and C₁₋₂₀ alkenyl or, for instance, from C₁₋₁₀ alkyl and C₁₋₁₀ alkenyl, provided in each case that the total number of carbon atoms in R⁴, R⁵ and R⁶ is at least 18.

More typically, one of the hydrocarbyl groups R⁴, R⁵ and R⁶ in the compound of formula (VIII) is a C₁₂₋₆₀ alkyl group, and the other two of R⁴, R⁵ and R⁶ are C₁₋₆₀ alkyl groups, provided that the total number of carbon atoms in R⁴, R⁵ and R⁶ is at least 18. Thus, for example, one of R⁴, R⁵ and R⁶ may be C₁₂₋₅₀ alkyl and the other two of R⁴, R⁵ and R⁶ may be C₁₋₅₀ alkyl groups, provided that the total number of carbon atoms in R⁴, R⁵ and R⁶ is at least 18. Often, for instance, one of R⁴, R⁵ and R⁶ is C₁₂₋₄₀ alkyl and the other two of R⁴, R⁵ and R⁶ are C₁₋₄₀ alkyls, provided that the total number of carbon atoms in R⁴, R⁵ and R⁶ is at least 18. In some embodiments, for example, one of R⁴, R⁵ and R⁶ is C₁₂₋₃₀ alkyl and the other two of R⁴, R⁵ and R⁶ are C₁₋₃₀ alkyl groups, or, for instance, one of R⁴, R⁵ and R⁶ may be C₁₂₋₂₀ alkyl and the other two of R⁴, R⁵ and R⁶ are C₁₋₂₀ alkyl groups or, for instance, C₁₋₁₀ alkyl groups, provided in each case that the total number of carbon atoms in R⁴, R⁵ and R⁶ is at least 18.

In some embodiments of the compound of formula (VIII), at least one of the hydrocarbyl groups R⁴, R⁵ and R⁶ is a hydrocarbyl group that has at least 18 carbon atoms. Thus, one, two, or all three, of the hydrocarbyl groups R⁴, R⁵ and R⁶ may be selected from C₁₈₋₁₅₀ hydrocarbyl groups. One, two, or all three, of R⁴, R⁵ and R⁶ may for instance be C₁₈₋₁₀₀ hydrocarbyl, or for instance C₁₈₋₈₀ hydrocarbyl. In one embodiment, one, two, or all three, of R⁴, R⁵ and R⁶ are selected from C₁₈₋₆₀ hydrocarbyl groups. One, two, or all three, of the hydrocarbyl groups R⁴, R⁵ and R⁶ in the compound of formula (VIII) may for example be C₁₈₋₅₀ hydrocarbyl groups. Often, for instance, one, two, or all three, of R⁴, R⁵ and R⁶ are selected from C₁₈₋₄₀ hydrocarbyl groups. In some embodiments, for example one, two, or all three, of R⁴, R⁵ and R⁶ are selected from C₁₈₋₃₀ hydrocarbyl groups. When only one of R⁴, R⁵ and R⁶ is such a hydrocarbyl group that has at least 18 carbon atoms, the other two of R⁴, R⁵ and R⁶ may be as defined hereinbefore more generally for R⁴, R⁵ and R⁶. Thus, the other two of R⁴, R⁵ and R⁶ may for instance be C₁₋₁₅₀ hydrocarbyl groups, or, for instance, C₁₋₅₀ hydrocarbyl, such as, for instance, C₁₋₄₀ hydrocarbyl groups, or more typically C₁₋₃₀ hydrocarbyl groups, such as for instance C₁₋₂₀ hydrocarbyl or C₁₋₁₀ hydrocarbyl.

Typically, however, one of the hydrocarbyl groups R⁴, R⁵ and R⁶ in the compound of formula (VIII) is C₁₈₋₆₀ hydrocarbyl, and the other two of R⁴, R⁵ and R⁶ are C₁₋₆₀ hydrocarbyl. Thus, for example, one of R⁴, R⁵ and R⁶ may be C₁₈₋₅₀ hydrocarbyl, and the other two of R⁴, R⁵ and R⁶ may be C₁₋₅₀ hydrocarbyl groups. Often, for instance, one of R⁴, R⁵ and R⁶ is a C₁₈₋₄₀ hydrocarbyl, and the other two of R⁴, R⁵ and R⁶ are C₁₋₄₀ hydrocarbyl groups. In some embodiments, for example, one of R⁴, R⁵ and R⁶ is C₁₈₋₃₀ hydrocarbyl, and the other two of R⁴, R⁵ and R⁶ are C₁₋₃₀ hydrocarbyl groups, or, for instance, one of R⁴, R⁵ and R⁶ may be C₁₈₋₂₀ hydrocarbyl, and the other two of R⁴, R⁵ and R⁶ may be C₁₋₂₀ hydrocarbyl groups or, for instance, C₁₋₁₀ hydrocarbyl groups.

Typically, the hydrocarbyls are straight-chained, branched or cyclic, saturated or unsaturated aliphatic hydrocarbyl groups.

Often, for instance, one of the hydrocarbyl groups R⁴, R⁵ and R⁶ in the compound of formula (VIII) is a C₁₈₋₆₀ alkyl or a C₁₈₋₆₀ alkenyl group, and the other two of R⁴, R⁵ and R⁶ are selected from C₁₋₆₀ alkyl and C₁₋₆₀ alkenyl groups. Thus, for example, one of R⁴, R⁵ and R⁶ may be C₁₈₋₅₀ alkyl or C₁₈₋₅₀ alkenyl, and the other two of R⁴, R⁵ and R⁶ may be selected from C₁₋₅₀ alkyl and C₁₋₅₀ alkenyl. Often, for instance, one of R⁴, R⁵ and R⁶ is C₁₈₋₄₀ alkyl or C₁₈₋₄₀ alkenyl, and the other two of R⁴, R⁵ and R⁶ are selected from C₁₋₄₀ alkyl and C₁₋₄₀ alkenyl. In some embodiments, for example, one of R⁴, R⁵ and R⁶ is C₁₈₋₃₀ alkyl or C₁₈₋₃₀ alkenyl, and the other two of R⁴, R⁵ and R⁶ are selected from C₁₋₃₀ alkyl and C₁₋₃₀ alkenyl, or, for instance, one of R⁴, R⁵ and R⁶ may be C₁₈₋₂₀ alkyl or C₁₈₋₂₀ alkenyl, and the other two of R⁴, R⁵ and R⁶ may be selected from C₁₋₂₀ alkyl and C₁₋₂₀ alkenyl or for instance, from C₁₋₁₀ alkyl and C₁₋₁₀ alkenyl.

More typically, one of the hydrocarbyl groups R⁴, R⁵ and R⁶ in the compound of formula (VIII) is a C₁₈₋₆₀ alkyl group, and the other two of R⁴, R⁵ and R⁶ are C₁₋₆₀ alkyl groups. Thus, for example, one of R⁴, R⁵ and R⁶ may be C₁₈₋₅₀ alkyl and the other of R⁴, R⁵ and R⁶ may be C₁₋₅₀ alkyls. Often, for instance, one of R⁴, R⁵ and R⁶ is C₁₈₋₄₀ alkyl and the other two of R⁴, R⁵ and R⁶ are C₁₋₄₀ alkyl groups. In some embodiments, for example, one of R⁴, R⁵ and R⁶ is C₁₈₋₃₀ alkyl and the other two of R⁴, R⁵ and R⁶ are C₁₋₃₀ alkyl groups, or, for instance, one of R⁴, R⁵ and R⁶ may be C₁₈₋₂₀ alkyl and the other two of R⁴, R⁵ and R⁶ may be C₁₋₂₀ alkyl groups or, for instance, C₁₋₁₀ alkyl groups.

Often, the compounds which comprise one or more hydrocarbyl groups wherein the total number of carbon atoms in the one or more hydrocarbyl groups is at least 18 are compounds of formulae (I), (II), (III), (IV), (V), (VI), (VII) and (VIII) wherein: R¹ is a C₁₈₋₁₅₀ hydrocarbyl group; R² and R³ are independently selected from C₁₋₁₅₀ hydrocarbyl groups, provided that the total number of carbon atoms in R² and R³ is at least 18; and R⁴, R⁵ and R⁶ are independently selected from C₁₋₁₅₀ hydrocarbyl groups, provided that the total number of carbon atoms in R⁴, R⁵ and R⁶ is at least 18. R¹ to R⁶ may be as further defined above. For instance, R¹ may be a C₁₈₋₆₀ hydrocarbyl group; R² and R³ may be independently selected from C₁₋₆₀ hydrocarbyl groups, provided that the total number of carbon atoms in R² and R³ is at least 18; and R⁴, R⁵ and R⁶ may be independently selected from C₁₋₆₀ hydrocarbyl groups, provided that the total number of carbon atoms in R⁴, R⁵ and R⁶ is at least 18.

The hydrocarbons that have at least 18 carbon atoms, defined above, and the above-defined compounds which comprise one or more hydrocarbyl groups in which the total number of carbon atoms is at least 18, include various different types of waxes.

As the skilled person will appreciate, waxes are organic compounds, or mixtures of organic compounds, that characteristically comprise long alkyl chains. Natural waxes may contain esters of carboxylic acids and long chain alcohols or mixtures of substituted hydrocarbons, such as long chain fatty acids and primary alcohols. Synthetic waxes are long-chain hydrocarbons lacking functional groups.

Waxes that are encompassed in the definitions above, of the hydrocarbons and the compounds which comprise one or more hydrocarbyl groups, include, but are not limited to, the following kinds of waxes:
(1) Petroleum waxes. These include paraffin waxes. Paraffin waxes are hydrocarbons, typically mixtures of alkanes, usually in a homologous series of chain lengths. Paraffin wax typically consists of a mixture of hydrocarbon molecules containing from 18 to 50 carbon atoms, more typically from 20 to 40 carbon atoms. It is solid at room temperature and typically begins to melt above approximately 37 °C (99 °F); its boiling point is >370 °C (698 °F). These materials represent a significant fraction of petroleum. They are usually refined by vacuum distillation. Paraffin waxes are typically mixtures of saturated n- and iso-alkanes, naphthenes (i.e. cycloalkanes), and alkyl- and naphthene-substituted aromatic compounds. The degree of branching has an important influence on the properties. Millions of tons of paraffin waxes are produced annually. They are used in foods (such as chewing gum and cheese wrapping), in candles and cosmetics, as non-stick and waterproofing coatings and in polishes.

Petroleum waxes also include microcrystalline waxes, which, in contrast to the more familiar paraffin wax which contains mostly unbranched alkanes, contains a higher percentage of isoparaffinic (branched) hydrocarbons and naphthenic hydrocarbons.

Petroleum waxes also include petroleum jelly, which is a soft, solid mixture of hydrocarbons with carbon numbers mainly higher than 25.

(2) Synthetic waxes. Synthetic waxes include polyethylene waxes, which are generally obtained by cracking polyethylene at about 400 °C. The products have the formula (CH₂)ₙH₂, where n ranges from about 50 to about 100. As of 1995, about 200 million kilograms per year were consumed.

Synthetic waxes also include waxes obtained by the Fischer-Tropsch process ('Fischer-Tropsch waxes') and, for instance, waxes obtained by polymerising α-olefins.

(3) Mineral waxes. Montan wax is an example of a mineral wax. Montan wax is a fossilized wax extracted from coal and lignite, which contains a high concentration of saturated fatty acids and alcohols.

(4) Plant (vegetable) and animal waxes. These are waxes synthesized by plants and animals. Animal waxes typically consist of wax esters derived from a variety of carboxylic acids and fatty alcohols. In waxes of plant origin characteristic mixtures of unesterified hydrocarbons may predominate over esters. The composition depends not only on species, but also on geographic location of the organism. Because they are mixtures, naturally produced waxes are softer and melt at lower temperatures than the pure components.

The most commonly known animal wax is beeswax, a major component of which is the ester myricyl palmitate which is an ester of triacontanol and palmitic acid. Its melting point is 62-65 °C. Spermaceti occurs in large amounts in the head oil of the sperm whale. One of its main constituents is cetyl palmitate, another ester of a fatty acid and a fatty alcohol. Lanolin is a wax obtained from wool, consisting of esters of sterols.

Another animal wax is tallow, which consists mainly of triglycerides (fat), whose major constituents are derived from stearic and oleic acids. Tallow was traditionally used as candle wax, i.e. to make moulded candles, before more convenient wax varieties became available (and for some time after, as they continued to be a cheaper alternative).

An example of a plant wax is Carnauba wax, a hard wax obtained from the Brazilian palm *Copernicia prunifera* containing the ester myricyl cerotate. Other vegetable waxes include, Castor wax, i.e. hydrogenated castor oil, candelilla wax, which consists mainly of hydrocarbons, esters, and free carboxylic acids, and ouricury wax.

Accordingly, in one embodiment, the composition employed in the process of the invention comprises a wax and said catalyst. The wax may be any of the particular kinds discussed herein. Thus, it may be a petroleum wax, a synthetic wax, an animal wax, or a plant wax. Typically it is a petroleum wax. The wax may for instance be paraffin wax.

The hydrocarbons defined above, including of course the hydrocarbons that have at least 18 carbon atoms, also include hydrocarbon polymers.

Accordingly, in one embodiment, the at least one organic compound comprises a hydrocarbon polymer. The hydrocarbon polymer may, for instance, be a plastic or a rubber. The hydrocarbon polymer is typically, for instance, a polyolefin. Suitable polyolefins include, but are not limited to, polyethylene, polypropylene, polymethylpentene, polybutene-1, and including for instance polyolefin elastomers, such as, for example, polyisobutylene, ethylene propylene rubber, and ethylene propylene diene monomer (M-class) rubber. In one embodiment, the hydrocarbon polymer is polyethylene or polypropylene. The hydrocarbon polymer may, for example, be a hydrocarbon polymer having a molecular weight of at least 1,800 Daltons. Hydrocarbon polymers having molecular weights lower than this are of course encompassed by the term "C₅₋₁₅₀ hydrocarbons". The hydrocarbon polymer may for instance be a polyolefin having a molecular weight of at least 1,800 Daltons. It may for instance be a polyolefin having a molecular weight of at least 3,000 Daltons, or, for instance, at least 6,000 Daltons, for instance at least 10,000 Daltons. However, it may alternatively be a polyolefin having a much higher molecular weight, for instance, high density polyethylene (typically having a molecular weight of greater than 15,000 Daltons, for instance from 20,000 Daltons to 60,000 Daltons) or even ultra-high-molecular-weight polyethylene (typically having a molecular weight of at least one million Daltons, for instance from 2 to 6 million Daltons).

The at least one organic compound may therefore comprise a hydrocarbon polymer having a molecular weight of from 1,800 Daltons to 6 million Daltons, or for instance from 3,000 Daltons to 2 million Daltons. It may for example have a molecular weight of from 3,000 Daltons to 1 million Daltons, for instance a molecular weight of from 6,000 Daltons to 60,000 Daltons. The hydrocarbon polymer may, on the other hand, have a molecular weight of from 1,800 Daltons to 20,000 Daltons, for example from 1,800 Daltons to 15,000 Daltons. The hydrocarbon polymer may for instance be a polyolefin having any of these molecular weight ranges.

In one embodiment, the composition employed in the process of the invention comprises crude oil and said catalyst. As the skilled person will appreciate, crude oil typically contains a mixture of gasoline range hydrocarbons, kerosene range hydrocarbons, and diesel range hydrocarbons, and the hydrocarbons in each case include mixtures of paraffins (alkanes), cycloalkanes (naphthenes), and olefins (alkenes), and (certainly in the cases of kerosene and diesel but not necessarily in the case of gasoline:) aromatic hydrocarbons (for instance, naphthalenes and alkylbenzenes). In one embodiment, the composition employed in the process of the invention comprises crude oil and the catalyst comprises iron metal supported on a zeolite. The catalyst which comprises iron metal supported on a zeolite may be as further defined herein.

The crude oil may for instance be Arabian crude oil.

The crude oil may for instance comprise from 20 to 45 wt % diesel range hydrocarbons, from 40 to 65 wt % kerosene range hydrocarbons, and from 10 to 30 wt % gasoline range hydrocarbons.

The crude oil may for instance be crude oil which has a carbon content of at least 80 wt % and a hydrogen content of at least 10 wt %, more typically a carbon content of at least 83 wt % and a hydrogen content of at least 11 wt %, even more typically a carbon content of at least 84 wt % and a hydrogen content of at least 12 wt %. The balance of elements typically comprises, more typically consists essentially of, or consists of: sulphur, nitrogen and metal.

The catalyst employed in the process of the invention is usually a solid catalyst.

The catalyst is generally an inorganic material. It usually comprises an element, which is typically a metal element but may alternatively be a non-metal element from the p-block of the periodic table. Said element is either in its elemental form or in the form of an inorganic compound of the element. The p-block non-metal is other than nitrogen, oxygen, sulfur, selenium, polonium (which is radioactive), the halogens and the noble gases and may therefore be B, C, Si, P, Ge, As, Sb or Te. When an inorganic compound of the element is employed, this is generally not an oxide. The term "inorganic compound" in this context is intended to include organometallic compounds. The inorganic compound of the element may therefore be, for instance, a carbide of the element, a hydride of the element, or, for instance an organometallic compound comprising the element when the element is a metal.

Accordingly, the catalyst employed in the present invention generally comprises:
a metal in elemental form (i.e. a metal in the oxidation state 0);
a metal compound other than a metal oxide;
a non-metal in elemental form (i.e. a non-metal in the oxidation state 0) selected from B, C, Si, P, Ge, As, Sb and Te; or
an inorganic compound of said non-metal element (i.e. an inorganic compound of B, C, Si, P, Ge, As, Sb or Te) other than an oxide of the non-metal element.

For the avoidance of doubt, an inorganic compound of the non-metal element carbon excludes organic compounds in which carbon is bonded to hydrogen and also perhalogenated organic compounds such as carbon tetrachloride, fluorocarbons and chlorofluorocarbons. Inorganic compounds of carbon do however include, for instance, inorganic carbides, cyanides and carbonates, such as for instance metal carbides, cyanides and carbonates.

The term "transition metal" as used herein means any one of the three series of elements arising from the filling of the 3d, 4d and 5d shells, and situated in the periodic table following the alkaline earth metals. This definition is used in N.N. Greenwood and A. Eamshaw "Chemistry of the Elements", First Edition 1984, Pergamon Press Ltd., at page 1060, first paragraph, with respect to the term "transition element". The same definition is used herein for the term "transition metal". Thus, the term "transition metal", as used herein, includes all of Sc, Y, Ti, Zr, Hf, V, Nb, Ta, Cr, Mo, W, Mn, Tc, Re, Fe, Ru, Os, Co, Rh, Ir, Ni, Pd, Pt, Cu, Ag, Au, Zn, Cd and Hg. These are also referred to as the first, second and third row transition metals (i.e. the transition metals in periods 4, 5 and 6 of the periodic table).

The term "p-block metal" as used herein means any metal in the p-block of the periodic table. Thus, the term "p-block metal", as used herein, refers to a metal selected from Al, Ga, In, Tl, Sn, Pb and Bi.

The other elements in the p-block, including the semi-metals (i.e. the metalloids) B, Si, Ge, As, Se, Sb, Te and Po, are considered to be "non-metals" for the purpose of the present invention.

The terms "lanthanide" and "lanthanide metal", as used herein, take their normal meaning in the art, meaning any one of the the fifteen metallic chemical elements with atomic numbers 57 through 71, from lanthanum through lutetium, i.e. any one of La, Ce, Pr, Nd, Pm, Sm, Eu, Gd, Tb, Dy, Ho, Er, Tm, Yb and Lu. Note that lanthanum, La, may be classed as the first element in the lanthanide series, or alternatively as the first of the third row (sixth period) transition metal elements. For the purpose of the present invention, it is classed as the first element in the lanthanide series, i.e. as a lanthanide rather than a transition metal.

The term "alkali metal", as used herein, refers to the chemical elements found in Group 1 of the periodic table. The alkali metals are: Li, Na, K, Rb, Cs and Fr. However, Fr is highly radioactive and is typically not employed in the present invention. Accordingly, when an alkali metal is employed it is generally Li, Na, K, Rb or Cs. More typically, it is Li, Na or K.

The term "alkaline earth metal", as used herein, refers to the chemical elements found in Group 2 of the periodic table. The alkaline earth metals are Be, Mg, Ca, Sr, Ba and Ra. However, Ra is highly radioactive and is typically not employed in the present invention. Accordingly, when an alkaline earth metal is employed it is generally Be, Mg, Ca, Sr or Ba. More typically, it is Be, Mg, Ca or Sr. Often, for instance, it is Be, Mg or Ca.

When a metal is employed in the catalyst the metal may, for instance, be:
a transition metal, i.e. a metal selected from Sc, Y, Ti, Zr, Hf, V, Nb, Ta, Cr, Mo, W, Mn, Tc, Re, Fe, Ru, Os, Co, Rh, Ir, Ni, Pd, Pt, Cu, Ag, Au, Zn, Cd or Hg;
a p-block metal, i.e. a metal selected from Al, Ga, In, Tl, Sn, Pb and Bi;
a lanthanide, i.e. a metal selected from La, Ce, Pr, Nd, Pm, Sm, Eu, Gd, Tb, Dy, Ho, Er, Tm, Yb and Lu;
an alkali metal; or
an alkaline earth metal.

Accordingly, the catalyst typically comprises:
a metal in elemental form which is: a transition metal, a p-block metal, an alkali metal, an alkaline earth metal, or a lanthanide;
a compound, other than a metal oxide, of a transition metal, a p-block metal, an alkali metal, an alkaline earth metal or a lanthanide;
a non-metal in elemental form selected from B, C, Si, P, Ge, As, Sb and Te; or
an inorganic compound, other than an oxide, of B, C, Si, P, Ge, As, Sb or Te.

The metal employed in the catalyst is typically a transition metal, a p-block metal, an alkali metal, or an alkaline earth metal. Thus, the catalyst typically comprises such a metal in elemental form or a compound, other than an oxide, of such a metal. More typically, it is a transition metal or a p-block metal. Again, therefore, the catalyst more typically comprises such a metal in elemental form or a compound, other than an oxide, of such a metal.

The metal employed in the catalyst is typically a transition metal.

Thus, often, the catalyst comprises: a transition metal in elemental form; a compound, other than a metal oxide, of a transition metal; a non-metal in elemental form selected from B, C, Si, P, Ge, As, Sb and Te; or an inorganic compound, other than an oxide, of B, C, Si, P, Ge, As, Sb or Te.

The catalyst may for instance comprise: a transition metal in elemental form; or a compound, other than an oxide, of a transition metal. The compound, other than an oxide, of the transition metal may for instance be an organometallic compound comprising the transition metal, a transition metal hydride or a transition metal carbide.

Preferred transition metal elements include those of Groups 5, 6, 7, 8, 9, 10, 11 and 12 of the periodic table, i.e. V, Nb, Ta, Cr, Mo, W, Mn, Tc, Re, Fe, Ru, Os, Co, Rh, Ir, Ni, Pd, Pt, Cu, Ag, Au, Zn, Cd and Hg. The transition metal employed may for instance be V, Nb, Ta, Cr, Mo, W, Mn, Tc, Re, Fe, Ru, Os, Co, Rh, Ir, Ni, Pd, Pt, Cu, Ag, Au or Zn.

Particularly preferred transition metals include those of Groups 8, 9, 10 and 11 of the periodic table, i.e. Fe, Ru, Os, Co, Rh, Ir, Ni, Pd, Pt, Cu, Ag and Au.

The transition metal employed may for instance be a transition metal of Group 8, 9 or 10 of the periodic table, i.e. a transition metal selected from Fe, Ru, Os, Co, Rh, Ir, Ni, Pd and Pt. Often, the transition metal is employed is iron, cobalt or nickel, or a mixture thereof. These metals are effective catalysts in the context of the present invention and are inexpensive. Palladium, ruthenium and platinum are also particularly preferred. The transition metal employed in the catalyst is often therefore selected from Fe, Ru, Co, Ni, Pd and Pt, or for instance from Fe, Ru, Co, Ni and Pd.

The transition metal may for instance be selected from Ru, Ni, Pd and Pt, or for instance from Ru, Ni and Pd.

The transition metal may for instance be Fe.

Often, the catalyst comprises a transition metal in elemental form. The transistion metal may be as further defined anywhere herein.

In another embodiment, however, the metal is other than a transition metal. The catalyst may therefore comprise a metal, other than a transition metal, in elemental form, or in the form of a compound, other than an oxide, of the metal other than a transition metal.

The metal may for instance be a p-block metal, an alkali metal, an alkaline earth metal, or a lanthanide. Preferred p-block metals include Al, Ga, In, Sn, Pb and Bi. The p-block metal may for instance be selected from Al, Ga, In, Sn and Pb. Preferred alkali metals include Li, Na, K, Rb and Cs. The alkali metal may for instance be Li, Na or K. Preferred alkaline earth metals include Be, Mg, Ca, Sr and Ba. The alkaline earth metal may for instance be Be, Mg or Ca. The catalyst may for instance comprise any of said metals other than a transition metal, in elemental form, or in the form of a compound, other than an oxide, of the metal. The compound other than an oxide may for instance be an organometallic compound comprising the metal, a hydride or the metal or a carbide of the metal.

In one embodiment, for instance, the catalyst comprises an alkali metal in elemental form or an alkaline earth metal in elemental form. The alkali metal and alkaline earth metal may be as further defined above. The alkali metal may for instance be Li, Na, K, Rb or Cs and the alkaline earth metal may for example be Be, Mg, Ca, Sr or Ba. When an alkali metal (or an alkaline earth metal) in elemental form is employed as the catalyst, it may be present as a dispersion in a liquid or a solid host material. Suitable liquid or solid host materials include silica gel, zeolites and glass, e.g. Vycor glass in powdered form or even plate form. Thus, for example the catalyst may comprise an alkali metal (or an alkaline earth metal) dispersed in silica gel. Alkali metal silica gels are commercially available from Sigma Aldrich under the SiGNa trade name, and include, for instance, sodium silica gel, and sodium and potassium (NaK) alloy silica gel. The catalyst may alternatively comprise an alkali metal-loaded (or an alkaline earth metal-loaded) zeolite, or an alkali metal (or an alkaline earth metal) supported on glass. The glass may for instance be Vycor glass in powder form.

In another embodiment, the catalyst comprises a non-metal in elemental form selected from B, C, Si, P, Ge, As, Sb and Te; or an inorganic compound, other than an oxide, of said non-metal (i.e. of B, C, Si, P, Ge, As, Sb or Te). The inorganic compound other than an oxide may for instance be a hydride or a carbide of the non-metal, when the non-metal is other than carbon. When the non-metal is carbon, the inorganic compound other than an oxide may for instance be a carbide, cyanide, or carbonate of another element (such as a carbide, cyanide, or carbonate of metal or of a non-metal p-block element).

In another preferred embodiment, the catalyst comprises elemental carbon. The catalyst may for instance comprise activated carbon, or carbon black. Preferably, it comprises activated carbon.

Typically, the catalyst comprises particles of: said metal in elemental form, said metal compound other than a metal oxide, said non-metal in elemental form, or said inorganic compound of a non-metal. The particles are usually nanoparticles. Particles, or preferably nanoparticles, of said metal in elemental form, such as for instance said transition metal in elemental form, are particularly preferred. The transition metal employed in the particles may be as further defined herein. Thus, particularly preferred are particles, which are preferably nanoparticles, of a transition metal selected from V, Nb, Ta, Cr, Mo, W, Mn, Tc, Re, Fe, Ru, Os, Co, Rh, Ir, Ni, Pd, Pt, Cu, Ag, Au or Zn. Particles, such as nanoparticles, of Fe, Ru, Os, Co, Rh, Ir, Ni, Pd or Pt, are especially preferred, as are particles, such as nanoparticles, of Fe, Ru, Co, Ni, Pd or Pt. Additionally or alternatively, individual atoms of the above-mentioned metals may be present, as may clusters of two or more atoms of the metal.

As used herein the term "nanoparticle" means a microscopic particle whose size is typically measured in nanometres (nm). A nanoparticle typically has a particle size of from 0.5 nm to 500 nm. For instance, a nanoparticle may have a particle size of from 0.5 nm to 200 nm. More often, a nanoparticle has a particle size of from 0.5 nm to 100 nm, or for instance from 1 nm to 50 nm. A particle, for instance a nanoparticle, may be spherical or non-spherical. Non-spherical particles may for instance be plate-shaped, needle-shaped or tubular. The term "particle size" as used herein means the diameter of the particle if the particle is spherical or, if the particle is non-spherical, the volume-based particle size. The volume-based particle size is the diameter of the sphere that has the same volume as the non-spherical particle in question.

The catalyst used in the process of the invention for producing hydrogen may or may not further comprise a solid support material, in addition to: said metal in elemental form, said metal compound other than a metal oxide, said non-metal in elemental form, or said inorganic compound of a non-metal. In some embodiments, however, the catalyst does not further comprise a solid support material. Thus, said metal in elemental form, said metal compound other than a metal oxide, said non-metal in elemental form, or said inorganic compound of a non-metal, may be unsupported.

When a support material is employed, any suitable support material may be used. Stable support materials, which do not give off oxygen, sulphur or chloride (a) during exposure to the electromagnetic radiation, for instance during exposure to microwave radiation, or (b) during heating, are especially preferred.

Typically, when the catalyst further comprises a support, the metal in elemental form, the metal compound other than a metal oxide, the non-metal in elemental form, or the inorganic compound of a non-metal, as the case may be, is present in an amount of: from 0.1 to 99 weight %, based on the total weight of the catalyst including the support. It may for instance be present in an amount of from 0.5 to 80 weight %, based on the total weight of the catalyst including the support. It may however be present in an amount of from 0.5 to 60 weight %, more typically from 0.5 to 40 weight % or, for instance from 1 to 30 weight %, based on the total weight of the catalyst including the support. The metal in elemental form, the metal compound other than a metal oxide, the non-metal in elemental form, or the inorganic compound of a non-metal, as the case may be, may for instance be present in an amount of from 0.1 to 90 weight %, for instance from 0.1 to 10 weight %, or, for instance from 20 to 70 weight %, based on the total weight of the catalyst including the support. The metal in elemental form, the metal compound other than a metal oxide, the non-metal in elemental form, or the inorganic compound of a non-metal, as the case may be, may for example be present in an amount of from 1 to 20 weight %, for instance from 1 to 15 weight %, or, for example from 2 to 12 weight %, based on the total weight of the catalyst including the support.

The support may for instance comprise carbon, silica, a pillar clay, a metal oxide, or a zeolite. In one embodiment, however, the support comprises carbon, silica, a pillar clay, or a metal oxide. The support often for instance comprises carbon.

The support also often comprises a zeolite, for instance H-ZSM-5.

Iron metal supported on a zeolite is a particularly preferred catalyst. For instance, the catalyst may be iron metal supported on H-ZSM-5. Typically the iron content in the catalyst which comprises iron metal supported on a zeolite (for instance, iron metal supported on H-ZSM-5) is from 0.1 to 50 weight %. More typically the iron content in such a catalyst is from 0.5 to 40 weight %, for instance from 5 weight % to 35 weight %, or say, from 10 weight % to 30 weight % , for example from 15 weight % to 25 weight %.

When the support comprises a metal oxide, the metal is typically, titanium, zinc, an alkaline earth metal, a rare earth metal (typically a lanthanide), or a p-block metal. Thus, the metal oxide support may for instance be titania, zinc oxide, gallium oxide, alumina, MgO, ceria or lanthium oxide.

The support typically has a BET surface area of at least 1 m²g⁻¹, for instance from 1 m²g⁻¹ to 3000 m²g⁻¹. The support may for instance have a BET surface area of at least 5 m²g⁻¹, for instance from 5 m²g⁻¹ to 3000 m²g⁻¹. More typically, the BET surface area is for instance, at least 8 m²g⁻¹, or from 8 m²g⁻¹ to 3000 m²g⁻¹. The BET surface area may for instance be at least 200 m²g⁻¹, or from 200 m²g⁻¹ to 3000 m²g⁻¹. It may for instance be at least 500 m²g⁻¹, or from 500 m²g⁻¹ to 3000 m²g⁻¹.

In a preferred embodiment, the support is carbon. The carbon support typically has a BET surface area of at least 1 m²g⁻¹, for instance from 1 m²g⁻¹ to 3000 m²g⁻¹. It may for instance have a BET surface area of at least 5 m²g⁻¹, for example from 5 m²g⁻¹ to 3000 m²g⁻¹. More typically, the BET surface area is for instance, at least 8 m²g⁻¹, or from 8 m²g⁻¹ to 3000 m²g⁻¹. The BET surface area may for instance be at least 200 m²g⁻¹, or from 200 m²g⁻¹ to 3000 m²g⁻¹. It may for instance be at least 500 m²g⁻¹, or from 500 m²g⁻¹ to 3000 m²g⁻¹.

Usually, when the support is carbon, it is selected from activated carbons, carbon black, graphite powder (for instance T-44 graphite, which is commercially available), and any other high surface area carbons, for instance, microporous carbon, glassy carbon, charcoal, coke, carbon nanoparticles or carbon nanotubes. All of these forms of carbon are widely available.

In one embodiment, the catalyst comprises particles of said transition metal in elemental form (which transition metal may be as further defined herein) and a support material which comprises carbon, for instance any of the forms of carbon listed above. The particles of the transition metal are typically nanoparticles of the transition metal. For instance, they may be nanoparticles comprising elemental: Fe, Ru, Os, Co, Rh, Ir, Ni, Pd or Pt.

The catalysts employed in the present invention are commercially available and/or may readily be prepared by the skilled person using well known synthetic methods. The metals in elemental form are commercially available, as are the non-metal elements B, C, Si, P, Ge, As, Sb and Te. Compounds of those elements are also commercially available and/or can readily be prepared by the skilled person using well known methods. Activated carbon and carbon black, for instance, are readily available.

Metal and non-metal nanoparticles can be prepared using well-known precipitation methods, starting from a soluble metal or non-metal precursor compound such as a nitrate or other salt, a hydroxide, or an organo-metallic compound. Nanoparticles of a metal on a support can also be prepared by wet impregnation, incipient wetness, co-precipitation or other conventional catalyst preparative methods for generating supported metal catalysts. Alternatively, commercially available metal in powder form may be physically mixed with the support material. The catalysts may subsequently be activated, when necessary, by reducing the metal in hydrogen-containing gas to convert the metal into its elemental (metallic) form, or for instance into a metal carbide.

In a preferred embodiment, the composition which comprises the at least one organic compound and the catalyst is a uniform mixture of the at least one organic compound and the catalyst. Alternatively, however, the composition may be a non-uniform mixture of the at least one organic compound and the catalyst. For instance, the composition may comprise the catalyst in the form of a solid catalyst bed which is in contact with at least a portion of the at least one organic compound. The catalyst bed is generally porous and the at least one organic compound infiltrates into the catalyst bed.

Usually, the composition is a uniform mixture of the at least one organic compound and the catalyst. The mixture of the at least one organic compound and the catalyst may be a homogeneous mixture. Alternatively, it may be a heterogeneous mixture.

Typically, the catalyst is evenly distributed throughout at least a portion of the at least one organic compound. More typically, the catalyst is evenly distributed throughout (all of) the at least one organic compound.

The at least one organic compound may for instance be in the solid state (meaning in the solid state at SATP) and the catalyst is a solid catalyst, and the composition may comprise an intimate mixture of the catalyst and the at least one organic compound.

Alternatively, the at least one organic compound may be in the liquid state (meaning in the liquid state at SATP) and the catalyst may be a solid catalyst, and the catalyst may be suspended in the at least one organic compound. In other embodiments, however, the catalyst may be in liquid form, and therefore mixed in a miscible or immiscible mixture with the at least one organic compound. Alternatively, the catalyst may be dissolved in the at least one organic compound.

The composition is preferably substantially free of O₂. Accordingly, the composition is preferably free of O₂.

Typically, the composition is substantially free of moisture. Thus, the composition is preferably free of moisture.

The composition is typically, therefore, substantially free of moisture and oxygen (O₂). The composition is preferably therefore free of moisture and O₂.

The composition is typically under an inert atmosphere, when it is exposed to the electromagnetic radiation. Accordingly, the process typically comprises exposing the composition in an inert atmosphere, to the electromagnetic radiation. The inert atmosphere may for instance be an inert gas or a mixture of inert gases. The inert gas or mixture of inert gases typically comprises a noble gas, for instance argon. The process may further comprise purging the composition with the inert gas or mixture of inert gases prior to exposing the composition to the electromagnetic radiation.

Alternatively, the composition may be under reduced pressure, i.e. under vacuum, when it is exposed to the electromagnetic radiation.

The composition is typically prepared by mixing the at least one organic compound with the catalyst taking care to avoid contamination with oxygen and moisture. The catalyst can be dried beforehand using conventional methods, e.g. by heating it in air or in nitrogen at a temperature of around 100 °C to 150 °C. The at least one organic compound can also be dried beforehand using conventional drying methods. For instance, a wax can be treated in an oven by heating a beaker of the wax in the oven at temperatures below 100 °C. The mixing of the at least one organic compound with the catalyst typically comprises stirring or milling the at least one organic compound and the catalyst together, under conditions under which moisture and O₂ are unlikely to contaminate the sample. The catalyst is typically added slowly into the at least one organic compound, which is either already in liquid form or, if it is a wax, is first either melted to form a liquid (to which the catalyst can then be added), or is dissolved in a hydrocarbon solvent (such as toluene) to form a liquid slurry (to which the catalyst can then be added). The catalyst is added to this liquid, typically with continuous stirring, either at room temperature or, preferably, at an elevated temperature, e.g. at a temperature of from 50 °C to 70 °C, achieved for example by heating the organics using a hot plate. An intimate mixture of the two may thereby be formed in which the catalyst is evenly distributed throughout the at least one organic compound. If a hydrocarbon solvent, such as toluene, is employed to form a slurry with a solid hydrocarbon wax to facilitate mixing the wax with the catalyst, then the hydrocarbon solvent can either be retained, in which case it will become part of the "at least one organic compound" in the final composition that is employed in the process, or it can be removed before the process is performed, e.g. by evaporation.

An additional option is to form the composition *in situ.* Thus, the process may comprise forming said composition *in situ.*

The process may, for instance, comprise contacting the catalyst with the at least one organic compound, and thereby forming the composition, whilst exposing the catalyst and the at least one organic compound to the electromagnetic radiation. In this way, the composition may be formed *in situ* and exposed to said electromagnetic radiation in accordance with the process of the invention.

Forming the composition *in situ* may for instance comprise contacting the catalyst with the at least one organic compound by spraying the at least one organic compound onto the catalyst surface, or, for example, by continuously feeding the at least one organic compound over the catalyst. In these embodiments, the at least one organic compound may be in the liquid state under the conditions employed in the process. Thus, the at least one organic compound may comprise one or more organic compounds that are liquid at SATP. Additionally or alternatively, the at least one organic compound may comprise one or more organic compounds that are solid at SATP but under the conditions employed in the process are in a melted (i.e. liquid) state. The at least one organic compound may for instance comprise a melted wax. Another embodiment for forming the composition *in situ* would comprise putting the catalyst in contact with the at least one organic compound using a fluidized-bed catalyst configuration.

When the composition is formed *in situ* the at least one organic compound may have a very short contact time with the catalyst. In other words, the composition may only be formed momentarily. When the composition is formed, however, and the catalyst is therefore in contact with the at least one organic compound, the composition is exposed to said electromagnetic radiation.

The process of the invention may for instance comprise exposing the catalyst to the electromagnetic radiation whilst contacting the at least one organic compound with the catalyst, to form said composition *in situ,* and thereby exposing the composition to the electromagnetic radiation. In this way, even if the composition is only formed momentarily, the composition is still exposed to the electromagnetic radiation in accordance with the process of the invention.

The at least one organic compound may be contacted with the catalyst to form the composition by any suitable method, including for instance any of the methods described above. For instance, the at least one organic compound may be contacted with the catalyst to form the composition by spraying the at least one organic compound onto the catalyst surface, or by continuously feeding the at least one organic compound over the catalyst, for instance by using a fluidized bed reactor.

The percentage by weight of the catalyst in the composition, based on the total weight of the composition, is typically from 0.1 wt. % to 99.9 wt. %. The percentage by weight of the catalyst in the composition, based on the total weight of the composition, is often for instance from 5 wt. % to 95 wt. %. It may for instance be from 10 wt. % to 90 wt. %, or for instance from 15 wt. % to 85 wt. %. In some embodiments, for instance, it is from 30 wt. % to 70 wt. %, or for instance from 40 wt. % to 50 wt. In another embodiment, the percentage by weight of the catalyst in the composition, based on the total weight of the composition, is from 1 wt. % to 60 wt. %. It may for instance be from 1 wt. % to 55 wt. %, or for instance from 5 wt. % to 40 wt. %. In some embodiments, for instance, it is from 5 wt. % to 30 wt. %, or for instance from 5 wt. % to 20 wt. %.

Similarly, the percentage by weight of the at least one organic compound in the composition, based on the total weight of the composition, is typically from 99.9 wt. % to 0.1 wt. %. It may for instance be from 95 wt. % to 5 wt. %. For example, it may be from 90 wt. % to 10 wt. %, or for instance from 85 wt. % to 15 wt. %. In some embodiments, for instance, it is from 70 wt. % to 30 wt. %, or for instance from 60 wt. % to 40 wt. %. More typically, the percentage by weight of the at least one organic compound in the composition, based on the total weight of the composition, is from 99 wt. % to 40 wt. %. It may for instance be from 99 wt. % to 45 wt. %, or for instance from 95 wt. % to 60 wt. %. In some embodiments, for instance, it is from 95 wt. % to 70 wt. %, or for instance from 95 wt. % to 80 wt. %.

The weight ratio in the composition of the at least one organic compound to the catalyst is typically from 500:1 to 1 :500. The weight ratio in the composition of the at least one organic compound to the catalyst may for example be from 500:1 to 1:300, or for instance from 500:1 to 1:200. It may for instance be from 200:1 to 1:20, or for instance from 100:1 to 1:20, or from 50:1 to 1:20. In some embodiments, for instance, it is from 20:1 to 1:20. It may for instance be from 10:1 to 1:10, or, for instance from 5:1 to 1:5. In some embodiments, for instance, it is from 2:1 to 1:2. It may for instance be approximately 1:1. In another embodiment, however, it may be from 1:100 to 1:300, for instance approximately 1:200.

In the process of the invention, the composition is exposed to electromagnetic radiation in order to effect, or activate, the decomposition of said at least one organic compound in the composition to produce hydrogen. Said decomposition may be catalytic decomposition. Exposing the composition to the electromagnetic radiation may cause the composition to be heat up, but does not necessarily cause it to be heated. Other possible effects of the electromagnetic radiation to which the composition is exposed (which may be electric or magnetic field effects) include, but are not limited to, field emission, plasma generation and work function modification. For instance, the high fields involved can modify catalyst work functions and can lead to the production of plasmas at the catalyst surface, further shifting the character of the chemical processes involved. Any one or more of such effects of the electromagnetic radiation may be responsible for, or at least contribute to, effecting, or activating, the catalytic decomposition of the at least one organic compound in the composition to produce hydrogen.

Optionally, the process may further comprise heating the composition conventionally, i.e. heating the composition by a means other than exposing it to electromagnetic radiation. The process may, for instance, further comprise heating the composition externally. That is, the process may additionally comprise applying heat to the outside of the vessel, reactor or reaction cavity which contains the composition.

As mentioned above, the process, and in particular the step of exposing the composition to the electromagnetic radiation, is often carried out under ambient conditions. For instance, it may be carried out at SATP, i.e. at a temperature of 298.15 K (25 °C) and at 100,000 Pa (1 bar, 14.5 psi, 0.9869 atm).

The process, and in particular the step of exposing the composition to the electromagnetic radiation, may alternatively be carried out at temperatures and/or pressures other than SATP. Indeed, both very low and very high temperatures can be employed, i.e. from far below ambient to far above ambient, as could very low and high pressures. Usually, however, the step of exposing the composition to the electromagnetic radiation is carried out at temperatures and pressures that are at or relatively close to SATP.

The process may for instance comprise exposing the composition to the electromagnetic radiation, at a temperature of from -150 °C to 2,000 °C, or for instance at a temperature of from -80 °C to 1,000 °C, for instance from -20 °C to 400 °C, for instance from 0 °C to 200 °C, or at a temperature of from 5 °C to 100 °C, or for instance from 10 °C to 50 °C. Additionally, the process may comprise exposing the composition to the electromagnetic radiation, at a pressure of from 0.01 bar to 100 bar, or for instance at a pressure of from 0.1 bar to 10 bar, for instance from 0.5 bar to 5 bar, or for example from 0.5 bar to 2 bar.

In a more typical case, the process comprises exposing the composition to the electromagnetic radiation, at a temperature of from 0 °C to 200 °C and at a pressure of from 0.5 bar to 5 bar. For instance, it may comprise exposing the composition to the electromagnetic radiation, at a temperature of from 10 °C to 50 °C and at a pressure of from 0.5 bar to 2 bar.

The temperature, here, refers to the temperature of the composition during exposure of the composition to the electromagnetic radiation. The temperature in question may be achieved by the exposure of the composition to the electromagnetic radiation itself (i.e. by electromagnetic heating), by heating the composition conventionally (i.e. heating the composition by a means other than exposing it to electromagnetic radiation), or by a combination of the two. Heating the composition conventionally may for instance comprise heating the vessel or reactor which contains the composition.

The electromagnetic radiation that is employed in the process of the invention, in order to effect decomposition of the at least one organic compound is microwave radiation.

The term "microwave radiation", as used herein, takes its normal meaning, typically referring to electromagnetic radiation having a wavelength of from one meter to one millimetre, and having a corresponding frequency of from 300 MHz (100 cm) to 300 GHz (0.1 cm).

In principle, microwave radiation having any frequency in the microwave range, i.e. any frequency of from 300 MHz to 300 GHz, may be employed in the present invention. Typically, however, microwave radiation having a frequency of from 900 MHz to 4 GHz, or for instance from 900 MHz to 3 GHz, is employed. Microwave radiation having a frequency of from 900 MHz to 2.5 GHz is preferred, and in particular microwave radiation having a frequency of from 900 MHz to 2.45 GHz. Often for instance, microwave radiation having a frequency of 2.45 GHz is employed.

The power which the electromagnetic radiation needs to delever to the composition, in order to effect the decomposition of the at least one organic compound to produce hydrogen, will vary, according to, for instance, the particular organic compound or compounds employed in the composition, the particular catalyst employed in the composition, and the size, permittivity, particle packing density, shape and morphology of the composition. The skilled person however is readily able to determine a level of power which is suitable for effecting the decomposition of a particular composition.

The process of the invention may for example comprise exposing the composition to electromagnetic radiation which delivers a power, per cubic centimetre of the composition, of at least 1 Watt. It may however comprise exposing the composition to electromagnetic radiation which delivers a power, per cubic centimetre of the composition, of at least 5 Watts. Often, for instance, the process comprises exposing the composition to electromagnetic radiation which delivers to the composition a power of at least 10 Watts, or for instance at least 20 Watts, per cubic centimetre of the composition. The process of the invention may for instance comprise exposing the composition to electromagnetic radiation which delivers to the composition at least 25 Watts per cubic centimetre of the composition.

Often, for instance, the process comprises exposing the composition to electromagnetic radiation which delivers a power of from about 0.1 Watt to about 5000 Watts per cubic centimetre of the composition. More typically, the process comprises exposing the composition to electromagnetic radiation which delivers a power of from about 0.5 Watts to about 1000 Watts per cubic centimetre of the composition, or for instance a power of from about 1 Watt to about 500 Watts per cubic centimetre of the composition, such as, for instance, a power of from about 1.5 Watts to about 200 Watts, or say, from 2 Watts to 100 Watts, per cubic centimetre of the composition. In some embodiments, for instance the process comprises exposing the composition to electromagnetic radiation which delivers to the composition from about 5 Watts to about 100 Watts per cubic centimetre of the composition, or for instance from about 10 Watts to about 100 Watts per cubic centimetre, or for instance from about 20 Watts, or from about 25 Watts, to about 80 Watts per cubic centimetre of the composition.

In some embodiments, for instance, the process comprises exposing the composition to electromagnetic radiation which delivers a power of from about 2.5 to about 60 Watts per cubic centimetre of the composition. Thus, for example, if the volume of the composition is 3.5 cm³, the process of the invention typically comprises exposing the composition to electromagnetic radiation which delivers about 10 W to about 200 W to the composition (i.e. the "absorbed power" is from about 10 W to about 200 W).

Often, the power delivered to the composition (or the "absorbed power") is ramped up during the process of the invention. Thus, the process may comprise exposing the composition to electromagnetic radiation which delivers a first power to the composition, and then exposing the composition to electromagnetic radiation which delivers a second power to the composition, wherein the second power is greater than the first. The first power may for instance be from about 2.5 Watts to about 6 Watts per cubic centimetre of the composition. The second power may for instance be from about 25 Watts to about 60 Watts per cubic centimetre of the composition.

The electromagnetic radiation is microwave radiation, which may be as further defined hereinbefore.

The duration of exposure of the composition to the electromagnetic radiation may also vary in the process of the invention. In the embodiments discussed herein wherein the composition is formed *in situ,* it may be the case that the composition is formed only momentarily as the at least one organic compound is passed over the catalyst and momentarily contacts the catalyst. Accordingly, the duration of exposure of the composition to the electromagnetic radiation may in some cases be less than 1 second, or for instance, less than a millisecond. In cases where the duration of exposure is this minimal, the power of the electromagnetic radiation employed may be increased to compensate for the short contact time between the catalyst and the organic compound, i.e. to ensure that sufficient energy is delivered to the composition during that time to effect the decomposition of the hydrogen to produce hydrogen.

In other embodiments, however, the composition is not formed *in situ,* but is formed before it is exposed to the electromagnetic radiation. In such embodiments, the process typically comprises exposing the composition to the electromagnetic radiation until no more gas is produced.

Typically, the process comprises exposing the composition to the electromagnetic radiation for at least 0.1 seconds, or for instance, for at least 1 second. Typically, for instance, the process comprises exposing the composition to the electromagnetic radiation for at least 10 seconds, for instance at least 30 seconds, or for instance for at least one minute. In some embodiments, the process comprises exposing the composition to the electromagnetic radiation for at least 5 minutes, or, for instance, for at least 10 minutes. The process may for instance comprise exposing the composition to the electromagnetic radiation for at least 15 minutes, e.g. at least 30 minutes, or, for instance, for at least one hour. Embodiments are, for instance, envisaged wherein a given composition is exposed to electromagnetic radiation over a relatively long period of time, to effect sustained decomposition of the composition to produce hydrogen over a sustained period.

The process may for instance comprise exposing the composition, for at least 1 second, to electromagnetic radiation which delivers a power to the composition, per cubic centimetre of the composition, of at least 1 Watt, more typically at least 5 Watts. For instance, the process may comprise exposing the composition, for at least 1 second, to electromagnetic radiation which delivers a power, per cubic centimetre of the composition, of at least 10 Watts, more typically at least 20 Watts. It may for example comprise exposing the composition, for at least 1 second, to electromagnetic radiation which delivers a power, per cubic centimetre of the composition, of at least 50 Watts, or for instance at least 100 Watts.

Often, for instance, the process comprises exposing the composition, for at least 10 seconds, to electromagnetic radiation which delivers a power to the composition, per cubic centimetre of the composition, of at least 1 Watt, more typically at least 5 Watts. For instance, the process may comprise exposing the composition, for at least 10 seconds, to electromagnetic radiation which delivers a power, per cubic centimetre of the composition, of at least 10 Watts, more typically at least 20 Watts. It may for example comprise exposing the composition, for at least 10 seconds, to electromagnetic radiation which delivers a power, per cubic centimetre of the composition, of at least 50 Watts, or for instance at least 100 Watts.

In some embodiments, for instance, the process comprises exposing the composition, for at least one minute, to electromagnetic radiation which delivers a power to the composition, per cubic centimetre of the composition, of at least 1 Watt, more typically at least 5 Watts. For instance, the process may comprise exposing the composition, for at least one minute, to electromagnetic radiation which delivers a power to the composition, per cubic centimetre of the composition, of at least 10 Watts, more typically at least 20 Watts. It may for example comprise exposing the composition, for at least one minute, to electromagnetic radiation which delivers a power to the composition, per cubic centimetre of the composition, of at least 50 Watts, or for instance at least 100 Watts.

The process may, for instance, comprise exposing the composition, for at least 10 minutes, to electromagnetic radiation which delivers a power to the composition, per cubic centimetre of the composition, of at least 1 Watt, more typically at least 5 Watts. For instance, the process may comprise exposing the composition, for at least 10 minutes, to electromagnetic radiation which delivers a power, per cubic centimetre of the composition, of at least 10 Watts, more typically at least 20 Watts. It may for example comprise exposing the composition, for at least 10 minutes, to electromagnetic radiation which delivers a power to the composition, per cubic centimetre of the composition, of at least 50 Watts, or for instance at least 100 Watts.

As mentioned above, in some embodiments, exposing the composition to the electromagnetic radiation causes the composition to be heated. Electromagnetic heating provides a method of fast, selective heating of dielectric and magnetic materials. Rapid and efficient heating using microwaves is an example in which inhomogeneous field distributions in dielectric mixtures and field-focussing effects can lead to dramatically different product distributions. The fundamentally different mechanisms involved in electromagnetic heating cause enhanced reactions and new reaction pathways. Furthermore, the high fields involved can modify catalyst work functions and can lead to the production of plasmas at the catalyst surface, further shifting the character of the chemical processes involved.

The synergy of catalytic activity and microwave absorption properties of catalyst materials can be optimised using principles of electromagnetic power dissipation in powders, based upon the powder size and conductivity (Porch A., Slocombe D., Edwards P. P., Microwave absorption in powders of small conducting particles for heating applications, Phys.Chem. Chem. Phys., 2013, 15, 2757). Small, highly conducting particles do not heat effectively when placed in a microwave electric field because of screening of the field from within the particle. It is the magnetic absorption associated with induction that accounts for the large experimental heating rates observed for small metal particles. The presence of small metal particles causes heating in their surroundings and therefore higher electric field absorption, but this is due to the reconfiguration of the electric field in the space outside of the particles. Indeed, high fields develop at the surface of the particles, and at sites of close contact between particles hotspots can occur. This is the same mechanism that at sufficiently high electric field strengths can cause dielectric breakdown leading to arcing and the generation of other plasmas.

For particles of low conductivity, absorption is predominantly due to electric dipole absorption (driven by a microwave electric field), which is maximized in microwaves when the conductivity is approximately σ = ωε₀ (where σ is conductivity, ω is angular frequency and ε₀ is the permittivity of free space) and is independent of particle size. The major differences of electric and magnetic field heating are realised in this invention, with electromagnetic applicator designs allowing E-field or H-field heating independently to tailor heating rates, based upon catalyst permittivity, permeability and importantly, based upon the electric or magnetic high-field surface effects associated with electromagnetic mixtures (Porch A., Slocombe D., Edwards P. P., Microwave absorption in powders of small conducting particles for heating applications, Phys.Chem. Chem. Phys., 2013, 15, 2757).

The process of the invention comprises exposing said composition to said electromagnetic radiation. As explained above, this often, but not always, causes the composition to be heated. Thus, the process of the invention may comprise heating said composition by exposing the composition to the electromagnetic radiation.

The invention also provides a composition for generating hydrogen as defined in claims 6 and 7.

The invention also provides the use of a composition as defined herein for generating hydrogen. The composition may for instance be used for generating hydrogen for a fuel cell. In other words, the composition may be used for generating hydrogen as fuel for a fuel cell. Thus, the the composition may be used for generating hydrogen in order to power a fuel cell. The fuel cell may for instance be a proton exchange membrane (PEM) fuel cell.

Further provided is the use of a composition of the invention as defined above as a hydrogen storage material. The composition may for instance be used as a hydrogen storage material for a fuel cell. The composition may for instance be used as a hydrogen storage material in a vehicle powered by a fuel cell, or for instance as a hydrogen storage material in an electronic device powered by a PEM fuel cell.

The invention also provides a fuel cell module comprising (a) a fuel cell and (b) a hydrogen storage material comprising a composition of the invention as defined above. The fuel cell may be a PEM fuel cell, or a fuel cell in a vehicle. Such fuel cells are well known in the art and thus readily available to the skilled person. The fuel cell module may further comprise (c) a source of electromagnetic radiation suitable for exposing the composition to electromagnetic radiation and thereby effecting decomposition of the at least one organic compound to produce hydrogen. Said decomposition may be catalytic decomposition. The source of electromagnetic radiation may be as defined further herein, in connection with the process of the invention, as may the composition.

The invention also provides a vehicle comprising a fuel cell module as defined above.

The invention also provides an electronic device comprising a fuel cell module as defined above. Typically the fuel cell in the module is a PEM fuel cell.

The invention provides an electromagnetic activation system suitable for producing hydrogen from hydrocarbons, which system comprises: a reactor comprising a reaction cavity, which reactor is (i) configured to receive, in the reaction cavity, a composition to be decomposed, and (ii) configured to deliver hydrogen; and a source of electromagnetic radiation, suitable for exposing a composition in the reaction cavity to electromagnetic radiation and effecting decomposition of the composition to produce hydrogen. Said decomposition may be termed catalytic decomposition.

The composition to be decomposed is a composition as defined in claims 6 and 7.

In one embodiment of the electromagnetic activation system of the invention, the system is in use, or ready for use, and the reaction cavity therefore contains said composition, as defined herein, which comprises said at least one organic compound and said catalyst. Typically, in this embodiment, the reaction cavity contains said composition within at least one sample holder, for instance at least one sample tube, in the reaction cavity.

The reactor is configured to receive the composition to be decomposed. The reactor typically therefore comprises least one sample insertion hole, so that the sample can be introduced into the reaction cavity. As mentioned above, the composition is typically housed in at least one sample holder, which is typically a tube. Thus, the reactor typically comprises least one sample tube insertion hole, so that one or more sample tubes containing the composition to be decomposed may be introduced into the cavity.

The reactor is also configured to deliver hydrogen. Thus, the reactor typically comprises an outlet through which hydrogen gas, generated in accordance with the process of the invention, plus any by-products, may be released or collected.

The frequency of the electromagnetic radiation employed is microwave radiation.

A magnetron, solid state, or klystron source may be used to produce the microwaves. Heating modes may be continuous, pulsed and flash. The frequency and power of the microwave radiation may be as defined above in relation to the process of the invention. Often, the frequency of the microwave radiation is 2.45 GHz.

The electromagnetic activation system usually comprises a microwave applicator and, often, a resonant, single mode microwave applicator is employed. The resonant, single mode applicator may operate in TEₙₘₚ modes, TMₙₘₚ modes, or multi-mode. Often, however, the applicator is used to subject the composition to microwave electric fields in the TM₀₁₀ mode.

In some embodiments, therefore, the microwave applicator which is employed in the system of the invention is one which is configured to subject the composition to electric fields in the TM₀₁₀ mode.

Thus, typically the electromagnetic activation system is configured to subject the composition to electric fields in the TM₀₁₀ mode. Typically, the electric fields are microwave electric fields.

Electromagnetic coupling may be via a rectangular waveguide, cylindrical waveguide, or coaxial waveguide. Typically, however, electromagnetic energy is introduced into the reaction cavity by a waveguide in the TE₁₀ mode, coupling to the TM₀₁₀ mode of the reaction cavity. Typically, the reaction cavity is a cylindrical reaction cavity. Often, the waveguide is a WR340 waveguide. Highly uniform, axially polarised electric fields then result in the centre of the cavity, which can be used for dielectric heating of the sample.

The reactor comprising the cavity (and which therefore forms the cavity walls) may be aluminium or any other metal which is appropriate for the operating temperature conditions and the required conductivity for minimising wall losses. The reactor may for instance be constructed of aluminium.

The reactor often comprises a lid, a body, a waveguide coupling hole, and at least one sample insertion hole.

The cavity may be cylindrical, rectangular (i.e. cuboid), or indeed of any shape that suitably accommodates the required electromagnetic field distribution for effective decomposition of the sample to produce hydrogen. The cavity may operate in batch mode, with a fixed sample placed in the cavity for decomposition to produce hydrogen, or in flow mode, with the sample passing through the reaction zone continuously.

The cavity may operate in a resonant mode in order that materials can be heated at the standing waves antinodes, or the cavity may be operated in a transmission mode using a dummy load to absorb transmitted power without standing waves.

Tuning stubs and tuning walls may be used to provide optimum coupling of the microwave energy into the cavity dynamically. The tuning mechanism may operate in the cavity or in the coupling waveguide or both.

Often, the reaction cavity is configured to use the TM₀₁₀ mode for electric and magnetic heating.

Often, therefore, the reaction cavity is configured to use the TM₀₁₀ mode for electric and magnetic heating, and the electromagnetic heating system further comprises a waveguide coupled to the reactor, which waveguide is configured to introduce electromagnetic energy into the reaction cavity in the TE₁₀ mode and couple to the TE₀₁₀ mode of the reaction cavity. The waveguide may be a WR340 waveguide. In other embodiments, however, the coupling is impedance matched to enable critical coupling and effective heat generation in the composition to be decomposed. Often, therefore, the electromagnetic activation system of the invention is impedance matched.

The cavity may be constructed in a number of sizes to accommodate more sample and shift the operating frequencies to other ISM approved bands. The size may also be adjusted to more suitable form factors by filling the cavity region around the sample with a dielectric or magnetic material.

Often, however, the reaction cavity is substantially cylindrical. It may for instance be cylindrical. Often, in this embodiment, the reaction cavity has an inner radius of from 4 to 5 cm, for example, 4.6 cm. It also typically has a height of about 4 cm, although the cylindrical cavity may be extended in length to accommodate more sample and other modes, and it typically therefore has a height of at least about 4 cm.

The corresponding unloaded resonance typically occurs at a frequency of 2.45 GHz. The loaded frequency is shifted by the temperature dependent permittivity of the sample. Electromagnetic coupling may be maintained by using a microwave source with a wide spectral range. The system is preferably impedance matched, to ensure effective and efficient delivery of electromagnetic (usually microwave) power to the sample under all conditions of operation (temperature, reaction progress).

Electric or magnetic field driven heating may be used independently or together to efficiently produce hydrogen from the sample. Thus, the composition to be decomposed (the sample) may be placed in the centre of the cavity to be irradiated by the antinode of a chosen electric or magnetic mode, or the sample may be offset to the edge of the cavity to be irradiated by a chosen electric or magnetic mode.

The sample is typically however inserted along the central axis of the cylindrical cavity along the electric field antinode, through sample insertion holes at the top and bottom of the reactor.

The sample is usually contained in a sample holder, typically a sample tube, which, as discussed above, is transparent and typically therefore quartz. Other microwave-transparent materials such as aluminium may however be employed. The holder (or other part of the internal structure) may additionally be constructed from a microwave susceptible material to enhance heating effects.

Usually, the inner diameter of the sample tube is about 1 cm. However, the sample may be placed in larger tubes to enable greater throughput. The inner diameter of the sample tube is often therefore at least about 1cm. The sample may be distributed in a number of tubes in the cavity. This will enable greater penetration of the microwaves for a given total sample volume and reduce thermal gradients. Temperature readings may be taken through viewing holes in the side walls of the cavity.

The microwave source is usually computer controlled to give precise control over power levels, irradiation time and pulse mode parameters (pulse frequency and duty cycle). In this way, microwave parameters can be optimised for efficient production of hydrogen. Forward and reflected powers are usually measured using crystal detectors, and typically the source is protected by a circulator and dummy load.

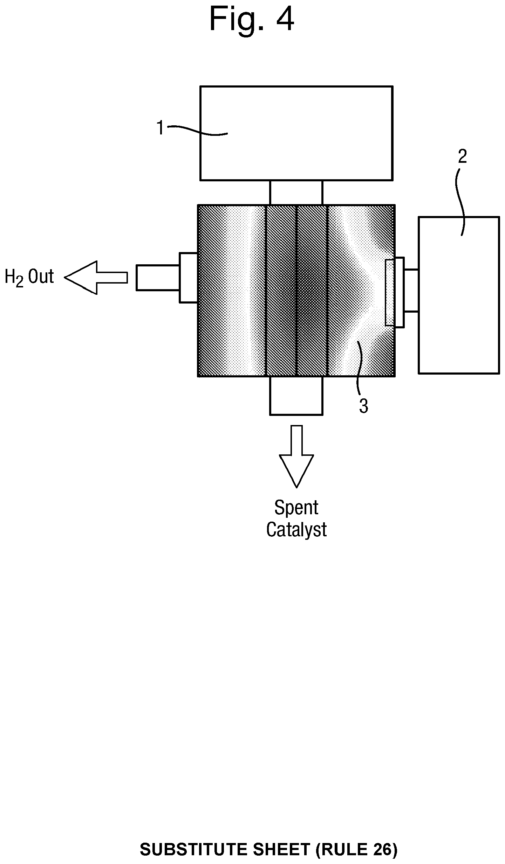

Fig. 4 presents a schematic diagram of the electromagnetic hydrogen production system (or electromagnetic activation system suitable for producing hydrogen from hydrocarbons) of the invention, in which 1. represents the feedstock of the composition, 2. is the source of electromagnetic radiation (a microwave source), and 3. is a reaction cavity, which may alternatively be known as a heating cavity. The diagram of the reaction cavity shows the electric field distribution in the TM₀₁₀ mode, used to heat a cylindrical sample passing vertically through the cavity.

Fig. 5: presents a diagram of a microwave reaction cavity (or heating cavity) which is typically employed in the present invention. The cavity shown here uses the TM₀₁₀ mode for both electric and magnetic heating and operates at a frequency of 2.45GHz. Different embodiments and designs are described herein to account for optimum catalytic enhancement in different modes, at different frequencies and in different form-factors. In this example, the coupling window is connected to a WR340 waveguide, however, in other embodiments, the coupling is impedance matched to enable critical coupling and effective heat generation in the composition to be decomposed.

Further provided is a system for generating hydrogen comprising (a) a composition of the invention as defined herein; and (b) a source of electromagnetic radiation, for exposing the composition to electromagnetic radiation and thereby effecting decomposition of the composition to produce hydrogen. Said decomposition may be catalytic decomposition.

The source of the electromagnetic radiation is a microwave source.

The present invention is further illustrated in the Examples which follow.

### EXAMPLES

To study the effect of the microwave susceptor/absorber (hereafter "catalceptor") formulation over the hydrogen production of two different paraffin sources various types of materials were evaluated, whose purity and sources are given in Table 1.

**Table 1. Purity and source for the material used in the invention**

| **Compound** | **Purity (%)** | **Source** |
|---|---|---|
| Activated carbon | 100.0 | Norit |
| Carbon black | 99.95 | Commercial |
| Pd/Carbon | 10 % metal | Commercial |
| Ru/Carbon | 5 % metal | Commercial |
| Pt/Carbon | 5 % metal | Commercial |
| Nickel powder | 99.99 | Sigma-Aldrich |
| Paraffin wax | 99.99 | Sigma-Aldrich |
| Candle wax | 100.0 | Commercial |

A volume equivalent to the microwave cavity of ca. 3.5 cm³ of impregnated catalyst was loaded into a quartz tubular reactor, with quartz wool located in both sides of the catalyst bed, which was then positioned inside the single-mode cavity. The fixed-bed reactor was operated under batch condition in inert (Ar) atmosphere at atmospheric pressure. The liquid product was collected in an ice-bath trap whilst the overall volume of the gases at nearly atmospheric pressure was measured using a eudiometer.

The microwave heating system comprised a microwave generator that operates at a frequency of 2.45 GHz. The device was equipped with a water-cooled circulator that was used to protect the magnetron from any reflected power. The reflected power was measured using a probe at the inlet of the water load. From the circulator microwaves were passing and flowing in only one direction toward a standard rectangular waveguide. The waveguide was combined with a cavity coupling aperture made of aluminium.

The sample temperature was measured by an infrared (IR) pyrometer, which was also used to control the power to the generator. The pyrometer was positioned horizontally to face a side hole on the cavity. The IR thermometer can only measure the external surface temperature of the catalyst. During the microwave experiment a temperature (T) versus time (t) on stream profile was recorded in a PC that also allowed to setup the microwave experimental conditions with a maximum power output of 2 kW. Typically, the power that was delivered to the sample by the microwave radiation, and which was dissipated over the sample volume, was from 100 W to 200 W (i.e. 100 to 200 Joules per second). The sample volume was typically about 3.5 cm³. Usually, the sample was exposed to this microwave radiation until no more gas generation occurred, which corresponded to a period between 600 and 1200 seconds. In a typical procedure, the sample (0.5-1.5 g) was located at about the middle of the vertical quartz tube reactor (22 cm in length and 1 cm in inner diameter) and was purged with an Argon flow (50-100 ml/min) for a period between 10 and 15 minutes. Then, the reactor was isolated under Ar atmosphere and connected to the Ar-pretreated eudiometer. The sample was initially irradiated with an input power of 100 W for ca. 30 seconds, to get an absorbed power, for the ca. 3.5 cm³ sample, of 10-20 W, and this caused gas to be produced which bubbled off slowly. Then, the input power was increased to 300 W and held for another ca. 30 seconds to increase the rate of gas evolution. Subsequently, the input power was set to 500 W and held for ca. 60 seconds to speed up the gas evolution further. In order to ensure that most of the hydrocarbon sample had decomposed the input power was increased to 1000 W and held for a period between 600 and 1200 seconds, until no more gas generation was noted, to get an absorbed power from 100 W to 200 W (i.e. 100 to 200 Joules per second).

The liquid product was condensed in the ice-bath trap and the gases were collected in a gas syringe or gas bag, and were then analysed by gas chromatography whilst the spent solid sample was stored in a container with oxygen- and moisture-free atmosphere.

### Example 1

Initially, a mass between 1.00 and 10.00 g of the solid bifunctional material (catalceptor) is weighed and treated at temperatures below 150 °C to remove moisture under air atmosphere, inert atmosphere or air, nitrogen or air flowing for a period of 16-24 hours. Simultaneously, between 1.00 and 10.00 g of the paraffin wax (hereafter PW) or candle wax (hereafter CW) with melting point between 54-57 °C and contained in a 50-250 mL beaker is treated in an oven at temperatures below 100 °C.

Then, the dried catalceptor is added slowly in the melted paraffin wax at room temperature or preferably at ca. 50-70 °C on a hot plate with continuous and gentle stirring of the slurry for 10-30 minutes to obtain a homogenous solid mixture after cooling down to room temperature. The samples containing 15 and 35 wt. % of paraffin wax were synthesized by dilution of the melted paraffin wax with toluene (between 85 and 50 wt. % of toluene) and then blending with the activated carbon to obtain an uniform slurry, which was then dried at temperature below 120 °C for a period of 16 hours.

**Table 2. Influence of the paraffin wax (PW) content and the type of carbon over the wax conversion, hydrogen and liquid yields.**

| **Sample code** | **Total mass balance (%)** | **Wax conv. (wt. %)** | **H2 yield (wt. %)** | **Liquid (wt. %)** |
|---|---|---|---|---|
| 15 % PW @ AC | 98.8 | 98.7 | 1.6 | 47.7 |
| 33 % PW @ AC | 98.3 | 81.9 | 1.4 | 7.7 |
| 50 % PW @ AC | 96.2 | 71.9 | 1.7 | 3.9 |
| 70 % PW @ AC | 93.7 | 53.4 | 1.8 | 2.5 |
| 64 % PW @ Carbon black | 102.0 | 66.3 | 0.4 | 35.9 |

The samples were irradiated with microwave radiation as described above using the microwave heating system, and the experimental data revealed a good overall mass balance (Table 2). Note that the wax conversion and the liquid yield clearly decreased with increasing loading of PW. On the other hand, the relatively small hydrogen yield did not vary markedly (1.4-1.8 wt. %) within this range of PW concentrations. The use of carbon black decreased not only the wax conversion but also the hydrogen yield compared to the data obtained from the PW-blended activated carbon (AC) sample.

### Example 2

The metal catalyst-containing samples were synthesized following a similar procedure to that described in Example 1. However, the Ni+AC catalceptor was initially prepared by mechanical mixture of approximately 1.00 g of Ni powder and 1.00 g of dried activated carbon. The metal catalceptors were then blended with paraffin wax and treated under similar conditions than that used in Example 1.

**Table 3. Dependence of the wax conversion, hydrogen and liquid yields with the catalyst formulation**

| **Sample code** | **Total mass balance (%)** | **Wax conv. (wt. %)** | **H2 yield (wt. %)** | **Liquid (wt. %)** |
|---|---|---|---|---|
| 50 % PW @ AC | 96.2 | 71.9 | 1.7 | 3.9 |
| 50.1 % PW @ 25 % Ni+25%AC | 89.6 | 50.8 | 2.8 | 0.0 |
| 49.9 % PW @ 10 % Pd/C | 100.9 | 53.1 | 6.2 | 8.0 |

It is noticeable the diminution of the PW conversion in the metal-containing catalysts (Table 3). However, the hydrogen yield is significantly enhanced in the metal catalysts, particularly for the 10 wt. % Pd/C formulation, because of their high dehydrogenation capability. A relatively low liquid yield (below 10 wt. %) was obtained for these formulation.

### Example 3

Table 4 clearly illustrates that the feedstock composition affected the wax conversion and the hydrogen yield, which was enhanced from paraffin wax. Note that both noble metals (i.e., Pd and Ru) showed significantly higher wax conversion and hydrogen yield than the formulation without metal (50 % CW @ AC). It is worth remarking that the catalyst bed configuration using two beds in series, locating the 50 % CW @ AC on the top of the catalyst bed and the metal catalyst in the bottom of the catalyst bed, is an interesting option to enhance not only wax conversion but also the hydrogen yield. However, a relatively large liquid yield was also obtained.

**Table 4. Influence of the feedstock, candle wax (CW) vs. paraffin wax, and the catalyst bed configuration over the wax conversion, hydrogen and liquid yields.**

| **Sample code** | **Total mass balance (%)** | **Wax conv. (wt. %)** | **H2 yield (wt. %)** | **Liquid (wt. %)** |
|---|---|---|---|---|
| 50 % CW@10 % Pd/C | 101.2 | 76.6 | 5.1 | 7.0 |
| 51 % CW @ 5 % Ru/C | 99.2 | 78.0 | 5.1 | 9.0 |
| 49.9 % PW @ 10 % Pd/C | 100.9 | 53.1 | 6.2 | 8.0 |
| 50 % CW @ AC | 101.9 | 69.5 | 2.3 | 21.3 |
| 50 % CW @ AC + 10 % Pd/C | 96.2 | 87.9 | 4.1 | 23.4 |

### Example 4

Table 5 compares the active carbon-supported Fe and Co catalceptors prepared by wet impregnation with a commercial 5 % Ru/C catalyst. The AC-supported Fe and Co catalceptors can also be prepared by co-precipitation method, employing an iron salt, iron oxide, iron hydroxide or an organometallic iron compound as the iron precursor compound. It is worth highlighting that pure Fe and AC-supported Fe and Co catalceptors were obtained by reduction of Fe (II)/Fe (III) at 700 °C under 10 vol. % H₂-Ar gas mixture; whilst the commericial carbon-supported Ru catalyst was treated at 450 °C in similar reducing gas mixture. The reduced metallic catalyst was then mixed with the solid hydrocarbon in oxygen and moisture free conditions and milled to provide a uniform mixture of the catalyst-hydrocarbons. The mixture was then subjected to microwave irradiation, and the resultant gas was collected and analysed by gas chromatography.

**Table 5. Comparison of Fe, Co and Ru catalceptors in the wax conversion, hydrogen, liquid and methane yields**

| **Sample code** | **Total mass balance (%)** | **Wax conv. (wt. %)** | **H2 yield (wt. %)** | **Liquid (wt. %)** | **CH4 yield (wt. %)** |
|---|---|---|---|---|---|
| 42 % PW @ Fe | 98.8 | 34.8 | 5.8 | 0.0 | 1.7 |
| 48.8 % PW @ 20 % Fe/AC | 99.0 | 44.3 | 8.8 | 23.3 | 5.7 |
| 49.9 % PW @ 20 % Co/AC | 92.3 | 50.0 | 8.5 | 0.0 | 6.3 |
| 58 % PW @ 5 % Ru/C | 90.3 | 52.9 | 8.1 | 0.0 | 10.9 |

Note that the the supported metal catalceptors showed significantly higher wax conversions than that given by the bulk Fe catalceptor (i.e. 42 % PW @ Fe), indicating that the relatively high metal dispersion on carbon would play a major role in the catalceptor performance. Indeed, the supported metals also displayed high H₂ yield, particularly the AC-supported Fe catalceptor (8.8 wt. %), which also showed a relatively low methane yield (5.7 wt. %). This sample also showed a relatively high yield of hydrocarbon-based liquid product.

### Distribution of major gas compounds for various samples

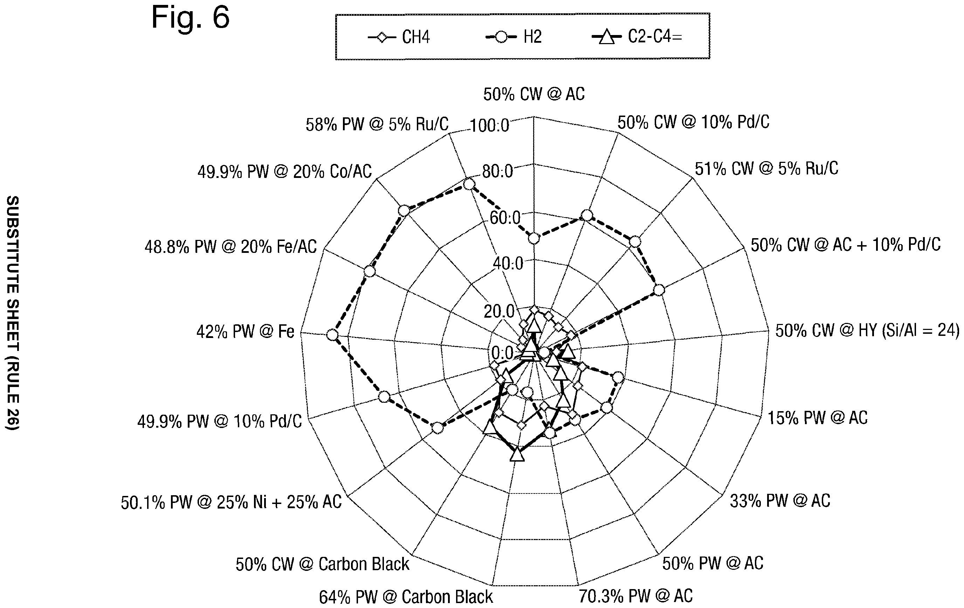

In Figure 6 is given the gas distribution for different samples explored in this invention. Note that in general the sample containing carbon-supported metal catalceptor favoured the production of hydrogen and methane as a secondary by-product whilst the carbon black-containing samples and the high loading paraffin wax on activated carbon (i.e., 70.3 wt. % PW @ AC) showed the production of olefins as major catalytic pathway. Also note that the Fe- and Co-containing catalysts whowed the highest H₂ productions (ca. 80-86 vol. %) and the lowest methane concentrations (ca. 3-7 vol. %)

### Wax characterization

The dynamic flash combustion method was used for the determination of carbon and hydrogen whilst oxygen was determined by subtraction (i.e., C+H+O = 100). The sample was heated at 900 - 1000°C and a small volume of pure oxygen was added to the system to burn the organic matrix. The elemental concentration was determined using a separation column and TCD detector.

**Table 6. C, H and O contents in the raw material**

| **Sample** | **Candle wax** | **Paraffin wax** |
|---|---|---|
| **C (wt. %)** | 80.34 | 85.05 |
| **H (wt. %)** | 13.88 | 14.95 |
| **O (wt. %)** | 5.77 | 0.00 |
| **O/C (molar ratio)** | 0.05 | 0.00 |
| **H/C (molar ratio)** | 2.07 | 2.11 |

According to the elemental composition of the waxes assessed in this invention (Table 6), the paraffin wax shows a gravimetric hydrogen density of nearly 15 wt. %. Currently approximately 60 wt. % of hydrogen relative to the maximum hydrogen density of the paraffin wax is being obtained.

### Example 5

### Catalyst preparation

After having been dried at 110 °C, the zeolite H-ZSM-5 (Si/Al = 46) was impregnated with an aqueous solution of iron nitrate at room temperature for 3 h, to obtain a loading of 20 wt. % Fe on the zeolite. Then, the wet solid was dried at 110 °C for 2 hours, and calcined at 550°C for 4 hours under an atmosphere of air. The resulting pre-catalyst is expected to contain a mixture of Fe (II) and Fe(III) on the H-ZSM-5 (Si/Al = 20). This sample was then reduced with 10 % H₂-Ar at 600 °C for 4 hours, in order to reduce the Fe(II) and Fe(III) to Fe(0), and thereby produce the active catalyst: 20 wt. % Fe/H-ZSM-5.

### Process operating conditions and reactant (fuel) properties

Arabian crude oil was used as the hydrogen source in this Example. Table 7 details the carbon and hydrogen contents of the crude oil and the various fuel fractions in the crude oil.

**Table 7. Composition and fuel fractions for Arabian crude oil**

| **Fuel Properties** | **Arabian crude oil** |
|---|---|
| C (wt. %) | 84.2 |
| H (wt. %) | 12.7 |
| Sulphur + Nitrogen + Metal (wt. %) | 3.1 |
| Gasoline (wt. %) | 20 |
| Kerosene (wt. %) | 54 |
| Diesel (wt. %) | 34 |
| Residue (wt. %) | 2 |

A trickled-bed reactor configuration was used, in which solid, liquid and gas phases simultaneously coexist. The reaction system was otherwise similar to the one employed for the batch condition experiments in the earlier Examples herein, comprising a microwave generator operating at 2.45 GHz. The 20 wt. % Fe/H-ZSM-5 catalyst was loaded into the reactor tube and treated under Ar flow (100 mL/min) for 15 minutes, and irradiated with microwave radiation for approximately 10 minutes in order to achieve the reaction temperature, of 450 °C. Once the reaction temperature had been achieved, the irradiation was continued in order to maintain the temperature and Arabian crude oil, whose properties are given in Table 7, was continuously fed (0.1 ml/min) into the reactor using a Series II pump operating in the mode of volumetric flow. The reaction was conducted at 450 °C, 0.1 MPa and 2.7 h⁻¹. Gas samples were collected every 5 minutes during the 20 minutes of reaction time and the distribution of gaseous products obtained at each point was analysed.

### Results

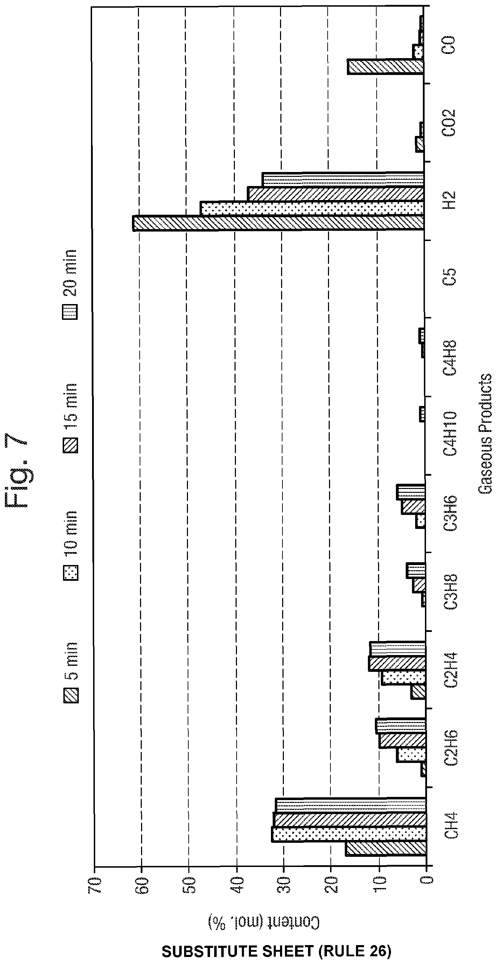

Figure 7 shows the distribution of gaseous products as sampled at each of the different reaction time-points tested (i.e. after 5 minutes, 10 minutes, 15 minutes and 20 minutes of the reaction). Thus Figure 7 shows the evolution of the gas phase with reaction time on stream.

The reaction was carried out for a period of 20 min and the gas samples were collected in periods of 5 minutes (after 5 minutes, 10 minutes, 15 minutes and 20 minutes). An overall gas volume of 740 ml was collected. The feedstock was continually fed into the reactor upon the reaction time.

Note that the presence of COₓ (CO+CO₂) at short time on stream is due to the possible partial oxidation of iron or even small content of moisture in the catalyst. The production of hydrogen continually decreased with increasing time on stream. On the other hand, the production of light hydrocarbons increased particularly at short time on stream (5-10 min). This trend is a consequence of the severe deactivation of the catalyst employed in this Example due to carbon deposition. This finding would indicate that the rapid evolution of high purity hydrogen at short reaction time would be the most convenient mode of operation for this particular embodiment.

## Claims

1. A process for producing hydrogen, which process comprises exposing a composition to electromagnetic radiation, wherein the electromagnetic radiation is microwave radiation, which composition comprises at least one organic compound and a catalyst, wherein:
the at least one organic compound is selected from:
hydrocarbons, and
compounds which comprise a hydrocarbyl group;
wherein said hydrocarbons are hydrocarbons having more than 12 carbon atoms and said hydrocarbyl group is a hydrocarbyl group which has more than 12 carbon atoms
and
the catalyst comprises:
a metal in elemental form;
a metal compound other than a metal oxide;
a non-metal in elemental form selected from B, C, Si, P, Ge, As, Sb and Te; or
an inorganic compound of said non-metal other than an oxide of the non-metal; and wherein:
the composition is a solid or liquid composition when at a temperature of 25 °C and at 100,000 Pa.

2. A process according to claim 1 wherein the composition is a solid composition and the at least one organic compound is in the solid state at a temperature of 25 °C and at 100,000 Pa.

3. A process according to claim 1 or claim 2 wherein the at least one organic compound is selected from: hydrocarbons that have at least 18 carbon atoms, and compounds which comprise one or more hydrocarbyl groups wherein the total number of carbon atoms in the one or more hydrocarbyl groups is at least 18, preferably wherein the hydrocarbons are C₁₈₋₁₅₀ hydrocarbons and the compounds which comprise one or more hydrocarbyl groups are compounds of the following formulae:
R¹OH (I)
R¹C(O)H (II)
R¹C(O)OH (III)
R²OR³ (IV)
R²C(O)R³ (V)
R²C(O)OR³ (VI)
R²-C(O)O-CH₂-CH₂-OC(O)-R³ (VII) 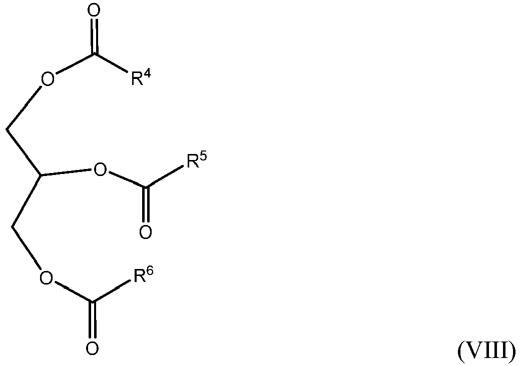
wherein:
R¹ is a C₁₈₋₁₅₀ hydrocarbyl group;
R² and R³ are independently selected from C₁₋₁₅₀ hydrocarbyl groups, provided that the total number of carbon atoms in R² and R³ is at least 18; and
R⁴, R⁵ and R⁶ are independently selected from C₁₋₁₅₀ hydrocarbyl groups, provided that the total number of carbon atoms in R⁴, R⁵ and R⁶ is at least 18.

4. A process according to any one claims 1 to 3 wherein:
the composition comprises crude oil and said catalyst; or
the composition comprises a wax and said catalyst, preferably wherein the wax comprises petroleum wax, synthetic wax, animal wax, or plant wax, more preferably wherein the wax comprises paraffin wax; or
the at least one organic compound comprises a hydrocarbon polymer which is polyethylene or polypropylene.

5. A process according to any one of the preceding claims wherein the catalyst comprises:
a metal in elemental form which is: a transition metal, a p-block metal, an alkali metal, an alkaline earth metal, or a lanthanide;
a compound, other than a metal oxide, of a transition metal, a p-block metal, an alkali metal, an alkaline earth metal or a lanthanide, preferably wherein said compound other than a metal oxide is a hydride of the metal, a carbide of the metal or an organometallic compound;
a non-metal in elemental form selected from B, C, Si, P, Ge, As, Sb and Te; or
an inorganic compound, other than an oxide, of B, C, Si, P, Ge, As, Sb or Te;
preferably wherein the catalyst comprises a transition metal in elemental form or a compound, other than an oxide, of a transition metal, and more preferably wherein the catalyst comprises a transition metal in elemental form, optionally wherein the transition metal is Fe, Ru, Co, Ni, Pd or Pt, or the catalyst comprises elemental carbon or activated carbon; or
preferably wherein the catalyst comprises nanoparticles of: said metal in elemental form, said metal compound other than a metal oxide, said non-metal in elemental form, or said inorganic compound of a non-metal, and the catalyst optionally further comprises a support material, preferably wherein the support material comprises carbon or a zeolite;
more preferably wherein the catalyst comprises nanoparticles of a transition metal in elemental form supported on carbon, or nanoparticles of a transition metal compound other than an oxide supported on carbon, wherein the transition metal is Fe, Ru, Os, Co, Rh, Ir, Ni, Pd or Pt.

6. A solid or liquid composition for generating hydrogen, which solid or liquid composition comprises at least one organic compound and a catalyst, wherein
the at least one organic compound is selected from: hydrocarbons, and compounds which comprise a hydrocarbyl group, and
the catalyst comprises: a metal in elemental form; a metal compound other than a metal oxide; a non-metal in elemental form selected from B, C, Si, P, Ge, As, Sb and Te; or an inorganic compound of said non-metal other than an oxide of the non-metal;
wherein:
(a) the at least one organic compound of the composition is in the solid or liquid state, and
(b) the at least one organic compound is at least one organic compound which is in the solid or liquid state when at a temperature of 25 °C and at 100,000 Pa, and
(c) said hydrocarbons are straight-chained, branched or cyclic, saturated or unsaturated aliphatic hydrocarbon compounds having more than 12 carbon atoms and said hydrocarbyl group is a straight-chained, branched or cyclic, saturated or unsaturated aliphatic hydrocarbyl group having more than 12 carbon atoms.

7. A composition according to claim 6, which comprises a uniform mixture of (a) petroleum wax, synthetic wax, animal wax, or plant wax, and (b) said catalyst, wherein the catalyst comprises: (i) a transition metal in elemental form; (ii) a compound, other than an oxide, of a transition metal; (iii) elemental carbon or (iv) activated carbon,
preferably wherein the composition comprises a uniform mixture of (a) parrafin wax, and (b) said catalyst, wherein the catalyst comprises Fe, Ru, Os, Co, Rh, Ir, Ni, Pd, Pt or activated carbon.

8. Use of a composition as defined in claim 6 or claim 7: (i) for generating hydrogen, preferably for generating hydrogen for a fuel cell; or (ii) as a hydrogen storage material, preferably as a hydrogen storage material for a fuel cell.

9. A fuel cell module comprising (a) a fuel cell and (b) a hydrogen storage material comprising a composition as defined in claim 6 or claim 7, optionally wherein the fuel cell module further comprises (c) a source of electromagnetic radiation for exposing the composition to electromagnetic radiation and thereby effecting catalytic decomposition of the at least one organic compound to produce hydrogen for the fuel cell.

10. A vehicle or an electronic device comprising a fuel cell module as defined in claim 9.

11. An electromagnetic activation system suitable for producing hydrogen from hydrocarbons, which system comprises:
a reactor comprising a reaction cavity, which reactor is (i) configured to receive, in the reaction cavity, a composition to be decomposed, and (ii) configured to deliver hydrogen,
wherein the composition to be decomposed is a composition as defined in claim 6 or claim 7 and the reaction cavity contains said composition;
and
a source of electromagnetic radiation, suitable for exposing a composition in the reaction cavity to electromagnetic radiation and thereby effecting decomposition of the composition to produce hydrogen,
wherein the the electromagnetic radiation is microwave radiation and wherein the electromagnetic activation system further comprises a resonant, single mode microwave applicator.

12. An electromagnetic activation system according to claim 11 wherein:
the electromagnetic radiation is microwave radiation which optionally has a frequency of 2.45 GHz,; and/or
the electromagnetic activation system is configured to subject the composition to microwave electric fields in the TM₀₁₀ mode; and/or
the reaction cavity is configured to use the TM₀₁₀ mode for electric and magnetic heating, optionally wherein the electromagnetic activation system further comprises a waveguide coupled to the reactor, which waveguide is configured to introduce electromagnetic energy into the reaction cavity in the TE₁₀ mode and couple to the TM₀₁₀ mode of the reaction cavity, optionally wherein the waveguide is a WR340 waveguide; and/or
the electromagnetic activation system is impedance matched; and/or
the reaction cavity is cylindrical, optionally wherein the cyclindrical reaction cavity has an inner radius of from 4 to 5 cm, and a height of at least about 4 cm.

13. Use of an electromagnetic activation system as defined in claim 11 or claim 12 for generating hydrogen from a composition as defined in claim 6 or claim 7.

14. A system for generating hydrogen comprising (a) a composition as defined in claim 6 or claim 7; and (b) a source of electromagnetic radiation suitable for exposing the composition to electromagnetic radiation and thereby effecting decomposition of the at least one organic compound to produce hydrogen, wherein the source of electromagnetic radiation is a microwave source.

## Patentansprüche

1. Verfahren zur Herstellung von Wasserstoff, wobei das Verfahren das Aussetzen einer Zusammensetzung gegenüber elektromagnetischer Strahlung umfasst, wobei die elektromagnetische Strahlung Mikrowellenstrahlung ist, wobei die Zusammensetzung mindestens eine organische Verbindung und einen Katalysator umfasst, wobei:
die mindestens eine organische Verbindung ausgewählt ist aus:
Kohlenwasserstoffen, und
Verbindungen, die eine Hydrocarbylgruppe umfassen;
wobei die Kohlenwasserstoffe Kohlenwasserstoffe mit mehr als 12 Kohlenstoffatomen sind und die Hydrocarbylgruppe eine Hydrocarbylgruppe mit mehr als 12 Kohlenstoffatomen ist
und
der Katalysator umfasst:
ein Metall in elementarer Form;
eine andere Metallverbindung als ein Metalloxid;
ein Nichtmetall in elementarer Form, ausgewählt aus B, C, Si, P, Ge, As, Sb und Te; oder eine anorganische Verbindung des Nichtmetalls, die kein Oxid des Nichtmetalls ist; und wobei:
die Zusammensetzung eine feste oder flüssige Zusammensetzung ist, wenn sie bei einer Temperatur von 25 °C und bei 100.000 Pa vorliegt.

2. Verfahren nach Anspruch 1, wobei die Zusammensetzung eine feste Zusammensetzung ist und die mindestens eine organische Verbindung bei einer Temperatur von 25 °C und bei 100.000 Pa im festen Zustand vorliegt.

3. Verfahren nach Anspruch 1 oder Anspruch 2, wobei die mindestens eine organische Verbindung ausgewählt ist aus: Kohlenwasserstoffen, die mindestens 18 Kohlenstoffatome aufweisen, und Verbindungen, die eine oder mehrere Hydrocarbylgruppen umfassen, wobei die Gesamtzahl der Kohlenstoffatome in der einen oder den mehreren Hydrocarbylgruppen mindestens 18 beträgt, vorzugsweise wobei die Kohlenwasserstoffe C₁₈₋₁₅₀-Kohlenwasserstoffe sind und die Verbindungen, die eine oder mehrere Hydrocarbylgruppen umfassen, Verbindungen der folgenden Formeln sind:
R¹OH (I)
R¹C(O)H (II)
R¹ C(O)OH (III)
R²OR³ (IV)
R²C(O)R³ (V)
R²C(O)OR³ (VI)
R²-C(O)O-CH₂-CH₂-OC(O)-R³ (VII) 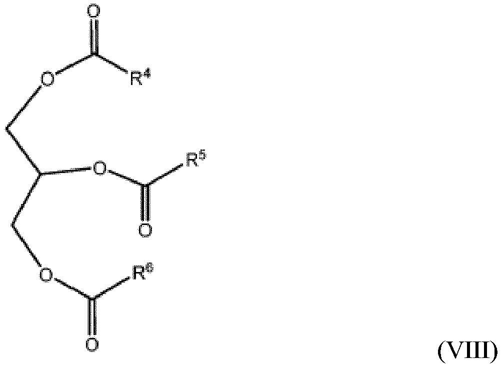
wobei:
R¹ eine C₁₈₋₁₅₀-Hydrocarbylgruppe ist;
R² und R³ unabhängig voneinander aus C₁₋₁₅₀-Hydrocarbylgruppen ausgewählt sind, mit der Maßgabe, dass die Gesamtzahl der Kohlenstoffatome in R² und R³ mindestens 18 beträgt; und
R⁴, R⁵ und R⁶ unabhängig voneinander aus C₁₋₁₅₀-Hydrocarbylgruppen ausgewählt sind, mit der Maßgabe, dass die Gesamtzahl der Kohlenstoffatome in R⁴, R⁵ und R⁶ mindestens 18 beträgt.

4. Verfahren nach einem der Ansprüche 1 bis 3, wobei:
die Zusammensetzung Rohöl und den Katalysator umfasst; oder
die Zusammensetzung ein Wachs und den Katalysator umfasst, wobei das Wachs vorzugsweise Erdölwachs, synthetisches Wachs, tierisches Wachs oder Pflanzenwachs umfasst, wobei das Wachs vorzugsweise Paraffinwachs umfasst; oder
die mindestens eine organische Verbindung ein Kohlenwasserstoffpolymer umfasst, das Polyethylen oder Polypropylen ist.

5. Verfahren nach einem der vorhergehenden Ansprüche, wobei der Katalysator umfasst:
ein Metall in elementarer Form, das: ein Übergangsmetall, ein p-Block-Metall, ein Alkalimetall, ein Erdalkalimetall oder ein Lanthanoid ist;
eine von einem Metalloxid verschiedene Verbindung eines Übergangsmetalls, eines p-Block-Metalls, eines Alkalimetalls, eines Erdalkalimetalls oder eines Lanthanoids, wobei die von einem Metalloxid verschiedene Verbindung vorzugsweise ein Hydrid des Metalls, ein Carbid des Metalls oder eine metallorganische Verbindung ist;
ein Nicht-Metall in elementarer Form, ausgewählt aus B, C, Si, P, Ge, As, Sb und Te; oder
eine anorganische Verbindung, die kein Oxid ist, von B, C, Si, P, Ge, As, Sb oder Te;
wobei der Katalysator vorzugsweise ein Übergangsmetall in elementarer Form oder eine von einem Oxid verschiedene Verbindung eines Übergangsmetalls umfasst, und noch bevorzugter, wobei der Katalysator ein Übergangsmetall in elementarer Form umfasst, optional wobei das Übergangsmetall Fe, Ru, Co, Ni, Pd oder Pt ist, oder der Katalysator elementaren Kohlenstoff oder Aktivkohle umfasst; oder
wobei der Katalysator vorzugsweise Nanopartikel umfasst von: dem Metall in elementarer Form, der Metallverbindung, die kein Metalloxid ist, dem Nichtmetall in elementarer Form oder der anorganischen Verbindung eines Nichtmetalls, und der Katalysator optional ferner ein Trägermaterial umfasst, wobei das Trägermaterial vorzugsweise Kohlenstoff oder einen Zeolithen umfasst;
wobei der Katalysator insbesondere vorzugsweise Nanopartikel eines Übergangsmetalls in elementarer Form auf einem Kohlenstoffträger oder Nanopartikel einer anderen Übergangsmetallverbindung als einem Oxid auf einem Kohlenstoffträger umfasst, wobei das Übergangsmetall Fe, Ru, Os, Co, Rh, Ir, Ni, Pd oder Pt ist.

6. Feste oder flüssige Zusammensetzung zur Erzeugung von Wasserstoff, wobei die feste oder flüssige Zusammensetzung mindestens eine organische Verbindung und einen Katalysator umfasst, wobei
die mindestens eine organische Verbindung ausgewählt ist aus: Kohlenwasserstoffen und Verbindungen, die eine Hydrocarbylgruppe umfassen, und
der Katalysator umfasst: ein Metall in elementarer Form; eine Metallverbindung, die kein Metalloxid ist; ein Nicht-Metall in elementarer Form, ausgewählt aus B, C, Si, P, Ge, As, Sb und Te; oder eine anorganische Verbindung des Nicht-Metalls, die kein Oxid des Nicht-Metalls ist;
wobei:
(a) die mindestens eine organische Verbindung der Zusammensetzung im festen oder flüssigen Zustand vorliegt, und
(b) die mindestens eine organische Verbindung mindestens eine organische Verbindung ist, die sich bei einer Temperatur von 25 °C und bei 100.000 Pa im festen oder flüssigen Zustand befindet, und
(c) die Kohlenwasserstoffe geradkettige, verzweigte oder cyclische, gesättigte oder ungesättigte aliphatische Kohlenwasserstoffverbindungen mit mehr als 12 Kohlenstoffatomen sind und die Hydrocarbylgruppe eine geradkettige, verzweigte oder zyklische, gesättigte oder ungesättigte aliphatische Hydrocarbylgruppe mit mehr als 12 Kohlenstoffatomen ist.

7. Zusammensetzung nach Anspruch 6, die ein einheitliches Gemisch aus (a) Petroleumwachs, synthetischem Wachs, tierischem Wachs oder Pflanzenwachs und (b) dem Katalysator umfasst, wobei der Katalysator umfasst: (i) ein Übergangsmetall in elementarer Form; (ii) eine andere Verbindung als ein Oxid eines Übergangsmetalls; (iii) elementaren Kohlenstoff oder (iv) Aktivkohle,
wobei die Zusammensetzung vorzugsweise ein einheitliches Gemisch aus (a) Parrafinwachs und (b) dem Katalysator umfasst, wobei der Katalysator Fe, Ru, Os, Co, Rh, Ir, Ni, Pd, Pt oder Aktivkohle umfasst.

8. Verwendung einer Zusammensetzung nach Anspruch 6 oder Anspruch 7: (i) zur Erzeugung von Wasserstoff, vorzugsweise zur Erzeugung von Wasserstoff für eine Brennstoffzelle; oder (ii) als Wasserstoffspeichermaterial, vorzugsweise als Wasserstoffspeichermaterial für eine Brennstoffzelle.

9. Brennstoffzellenmodul, umfassend (a) eine Brennstoffzelle und (b) ein Wasserstoffspeichermaterial, das eine Zusammensetzung gemäß Anspruch 6 oder Anspruch 7 umfasst, optional wobei das Brennstoffzellenmodul ferner (c) eine Quelle für elektromagnetische Strahlung umfasst, um die Zusammensetzung elektromagnetischer Strahlung auszusetzen und dadurch eine katalytische Zersetzung der mindestens einen organischen Verbindung zu bewirken, um Wasserstoff für die Brennstoffzelle zu erzeugen.

10. Fahrzeug oder elektronische Vorrichtung, das/die ein Brennstoffzellenmodul nach Anspruch 9 umfasst.

11. Elektromagnetisches Aktivierungssystem, das zur Herstellung von Wasserstoff aus Kohlenwasserstoffen geeignet ist, wobei das System umfasst:
einen Reaktor, der einen Reaktionshohlraum umfasst, wobei der Reaktor (i) dafür konfiguriert ist, in dem Reaktionshohlraum eine zu zersetzende Zusammensetzung aufzunehmen, und (ii) dafür konfiguriert ist, Wasserstoff zu liefern,
wobei die zu zersetzende Zusammensetzung eine Zusammensetzung nach Anspruch 6 oder Anspruch 7 ist und der Reaktionshohlraum die Zusammensetzung enthält;
und
eine Quelle für elektromagnetische Strahlung, die geeignet ist, eine Zusammensetzung in dem Reaktionshohlraum elektromagnetischer Strahlung auszusetzen und dadurch die Zersetzung der Zusammensetzung unter Erzeugung von Wasserstoff zu bewirken,
wobei es sich bei der elektromagnetischen Strahlung um Mikrowellenstrahlung handelt und wobei das elektromagnetische Aktivierungssystem ferner einen resonanten Einmoden-Mikrowellenapplikator umfasst.

12. Elektromagnetisches Aktivierungssystem nach Anspruch 11, wobei:
die elektromagnetische Strahlung Mikrowellenstrahlung ist, die optional eine Frequenz von 2,45 GHz aufweist; und/oder
das elektromagnetische Aktivierungssystem dafür konfiguriert ist, die Zusammensetzung elektrischen Mikrowellenfeldern im TM₀₁₀-Modus auszusetzen; und/oder
der Reaktionshohlraum dafür konfiguriert ist, den TM₀₁₀-Modus für die elektrische und magnetische Erwärmung zu verwenden, optional wobei das elektromagnetische Aktivierungssystem ferner einen mit dem Reaktor gekoppelten Wellenleiter umfasst, der dafür konfiguriert ist, elektromagnetische Energie in den Reaktionshohlraum im TE₁₀-Modus einzuleiten und an den TM₀₁₀-Modus des Reaktionshohlraums zu koppeln, optional wobei der Wellenleiter ein WR340-Wellenleiter ist; und/oder
das elektromagnetische Aktivierungssystem impedanzangepasst ist; und/oder
der Reaktionshohlraum zylindrisch ist, wobei der zylindrische Reaktionshohlraum optional einen Innenradius von 4 bis 5 cm und eine Höhe von mindestens etwa 4 cm aufweist.

13. Verwendung eines elektromagnetischen Aktivierungssystems nach Anspruch 11 oder Anspruch 12 zur Erzeugung von Wasserstoff aus einer Zusammensetzung nach Anspruch 6 oder Anspruch 7.

14. System zur Erzeugung von Wasserstoff, umfassend (a) eine Zusammensetzung nach Anspruch 6 oder 7; und (b) eine Quelle elektromagnetischer Strahlung, die geeignet ist, die Zusammensetzung elektromagnetischer Strahlung auszusetzen und dadurch die Zersetzung der mindestens einen organischen Verbindung zu bewirken, um Wasserstoff zu erzeugen, wobei die Quelle für elektromagnetische Strahlung eine Mikrowellenquelle ist.

## Revendications

1. Procédé pour produire de l'hydrogène, lequel procédé comprend l'exposition d'une composition à un rayonnement électromagnétique, dans lequel le rayonnement électromagnétique est un rayonnement de micro-ondes, laquelle composition comprend au moins un composé organique et un catalyseur, dans lequel :
l'au moins un composé organique est sélectionné parmi :
des hydrocarbures, et
des composés qui comprennent un groupe hydrocarbyle ;
dans lequel lesdits hydrocarbures sont des hydrocarbures ayant plus de 12 atomes de carbone et ledit groupe hydrocarbyle est un groupe hydrocarbyle qui a plus de 12 atomes de carbone,
et
le catalyseur comprend :
un métal de forme élémentaire ;
un composé de métal autre qu'un oxyde de métal ;
un non-métal de forme élémentaire sélectionné parmi B, C, Si, P, Ge, As, Sb et Te ; ou
un composé inorganique dudit non-métal autre qu'un oxyde du nonmétal ; et dans lequel :
la composition est une composition solide ou liquide lorsqu'elle est à une température de 25 °C et à 100 000 Pa.

2. Procédé selon la revendication 1, dans lequel la composition est une composition solide et l'au moins un composé organique est dans l'état solide à une température de 25 °C et à 100 000 Pa.

3. Procédé selon la revendication 1 ou la revendication 2 dans lequel l'au moins un composé organique est sélectionné parmi : des hydrocarbures qui ont au moins 18 atomes de carbone, et des composés qui comprennent un ou plusieurs groupes hydrocarbyle, dans lequel le nombre total d'atomes de carbone dans l'un ou les plusieurs groupes hydrocarbyle est au moins 18, de préférence dans lequel les hydrocarbures sont des hydrocarbures en C₁₈₋₁₅₀ et les composés qui comprennent un ou plusieurs groupes hydrocarbyle sont des composés des formules suivantes :
**R¹OH** **(I)**
**R¹C(O)H** (II)
**R¹C(O)OH** **(III)**
R²OR³ (IV)
R²C(O)R³ (V)
R²C(O)OR³ (VI)
R²-C(O)O-CH₂-CH₂-OC(O)-R³ (VII) 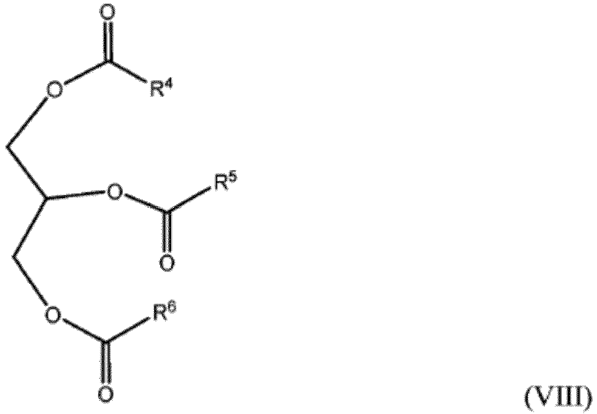
dans lequel :
R¹ est un groupe hydrocarbyle en C₁₈₋₁₅₀,
R² et R³ sont indépendamment sélectionnés parmi des groupes hydrocarbyle en C₁₋₁₅₀, à condition que le nombre total d'atomes de carbone dans R² et R³ soit au moins 18 ; et
R⁴, R⁵, et R⁶ sont indépendamment sélectionnés parmi des groupes hydrocarbyle en C₁₋₁₅₀, à condition que le nombre total d'atomes de carbone dans R⁴, R⁵, et R⁶ soit au moins 18.

4. Procédé selon l'une quelconque des revendications 1 à 3 dans lequel :
la composition comprend du pétrole brut et ledit catalyseur ; ou
la composition comprend une cire et ledit catalyseur, de préférence dans lequel la cire comprend une cire de pétrole, une cire synthétique, une cire animale, ou une cire végétale, mieux encore dans lequel la cire comprend de la cire de paraffine ; ou
l'au moins un composé organique comprend un polymère hydrocarbure qui est du polyéthylène ou du polypropylène.

5. Procédé selon l'une quelconque des revendications précédentes, dans lequel le catalyseur comprend :
un métal de forme élémentaire qui est : un métal de transition, un métal de bloc p, un métal alcalin, un métal alcalino-terreux, ou un lanthanide ;
un composé, autre qu'un oxyde de métal, d'un métal de transition, d'un métal de bloc p, d'un métal alcalin, d'un métal alcalino-terreux ou d'un lanthanide, de préférence dans lequel ledit composé autre qu'un oxyde de métal est un hydrure du métal, un carbure du métal ou un composé organométallique ;
un non-métal de forme élémentaire sélectionné parmi B, C, Si, P, Ge, As, Sb et Te ; ou
un composé inorganique, autre qu'un oxyde, de B, de C, de Si, de P, de Ge, d'As, de Sb ou de Te ;
de préférence dans lequel le catalyseur comprend un métal de transition de forme élémentaire ou un composé, autre qu'un oxyde, d'un métal de transition, et mieux encore dans lequel le catalyseur comprend un métal de transition de forme élémentaire, optionnellement dans lequel le métal de transition est Fe, Ru, Co, Ni, Pd ou Pt, ou le catalyseur comprend du carbone élémentaire ou du charbon actif ; ou
de préférence dans lequel le catalyseur comprend des nanoparticules de : ledit métal de forme élémentaire, ledit métal composé autre qu'un oxyde de métal, ledit non-métal de forme élémentaire, ou ledit composé inorganique d'un non-métal, et le catalyseur optionnellement comprend en outre un matériau de support, de préférence dans lequel le matériau de support comprend du carbone ou de la zéolite ;
mieux encore dans lequel le catalyseur comprend des nanoparticules d'un métal de transition de forme élémentaire supporté sur du carbone, ou des nanoparticules d'un composé de métal de transition autre qu'un oxyde supporté sur du carbone, dans lequel le métal de transition est Fe, Ru, Os, Co, Rh, Ir, Ni, Pd ou Pt.

6. Composition solide ou liquide pour générer de l'hydrogène, laquelle composition solide ou liquide comprend au moins un composé organique et un catalyseur, dans laquelle
l'au moins un composé organique est sélectionné parmi : des hydrocarbures, et des composés qui comprennent un groupe hydrocarbyle, et
le catalyseur comprend : un métal de forme élémentaire ; un composé de métal autre qu'un oxyde de métal ; un non-métal de forme élémentaire sélectionné parmi B, C, Si, P, Ge, As, Sb et Te ; ou un composé inorganique dudit non-métal autre qu'un oxyde du non-métal ;
dans laquelle :
(a) l'au moins un composé organique de la composition est dans l'état solide ou liquide, et
(b) l'au moins un composé organique est au moins un composé organique qui est dans l'état solide ou liquide lorsqu'il est à une température de 25 °C et à 100 000 Pa, et
(c) lesdits hydrocarbures sont des composés d'hydrocarbure aliphatiques à chaîne droite, ramifiés ou cycliques, insaturés ou insaturés, ayant plus de 12 atomes de carbone et ledit groupe hydrocarbyle est un groupe hydrocarbyle aliphatique à chaîne droite, ramifié ou cyclique, insaturé ou insaturé, ayant plus de 12 atomes de carbone.

7. Composition selon la revendication 6, qui comprend un mélange uniforme de (a) une cire de pétrole, une cire synthétique, une cire animale, ou une cire végétale, et (b) ledit catalyseur, dans laquelle le catalyseur comprend : (i) un métal de transition de forme élémentaire ; (ii) un composé, autre qu'un oxyde, d'un métal de transition ; (iii) du carbone élémentaire ou (iv) du charbon actif,
de préférence dans laquelle la composition comprend un mélange uniforme de (a) de la cire de paraffine, et (b) ledit catalyseur, dans laquelle le catalyseur comprend Fe, Ru, Os, Co, Rh, Ir, Ni, Pd, Pt ou du charbon actif.

8. Utilisation d'une composition telle que définie dans la revendication 6 ou la revendication 7 : (i) pour générer de l'hydrogène, de préférence pour générer de l'hydrogène pour une pile à combustible ; ou (ii) en tant que matériau de stockage d'hydrogène, de préférence en tant que matériau de stockage d'hydrogène pour une pile à combustible.

9. Module de pile à combustible, comprenant (a) une pile à combustible et (b) un matériau de stockage d'hydrogène comprenant une composition telle que définie dans la revendication 6 ou la revendication 7, optionnellement dans lequel le module de pile à combustible comprend en outre (c) une source de rayonnement électromagnétique pour exposer la composition à un rayonnement électromagnétique et ainsi effectuer une décomposition catalytique de l'au moins un composé organique pour produire de l'hydrogène pour la pile à combustible.

10. Véhicule ou dispositif électronique, comprenant une module de pile à combustible tel que défini dans la revendication 9.

11. Système d'activation électromagnétique approprié pour produire de l'hydrogène à partir d'hydrocarbures, lequel système comprend :
un réacteur comprenant une cavité de réaction, lequel réacteur est (i) configuré pour recevoir, dans la cavité de réaction, une composition destinée à être décomposée, et (ii) configuré pour distribuer de l'hydrogène, dans lequel la composition destinée à être décomposée est une composition telle que définie dans la revendication 6 ou la revendication 7 et la cavité de réaction contient ladite composition ;
et
une source de rayonnement électromagnétique, appropriée pour exposer une composition dans la cavité de réaction à un rayonnement électromagnétique et ainsi effectuer une décomposition de la composition pour produire de l'hydrogène,
dans lequel le rayonnement électromagnétique est un rayonnement de micro-ondes et dans lequel le système d'activation électromagnétique comprend en outre un applicateur de micro-ondes résonant monomode.

12. Système d'activation électromagnétique selon la revendication 11, dans lequel :
le rayonnement électromagnétique est un rayonnement de micro-ondes qui optionnellement a une fréquence de 2,45 GHz, ; et/ou
le système d'activation électromagnétique est configuré pour soumettre la composition à des champs électriques de micro-ondes dans le mode TM₀₁₀ ; et/ou
la cavité de réaction est configurée pour utiliser le mode TM₀₁₀ pour un chauffage électrique et magnétique, optionnellement dans lequel le système d'activation électromagnétique comprend en outre un guide d'ondes couplé au réacteur, lequel guide d'ondes est configuré pour introduire de l'énergie électromagnétique dans la cavité de réaction dans le mode TE₁₀ et se coupler au mode TM₀₁₀ de la cavité de réaction, optionnellement dans lequel le guide d'ondes est un guide d'ondes WR340 ; et/ou
le système d'activation électromagnétique est adapté en impédance ; et/ou
la cavité de réaction est cylindrique, optionnellement dans lequel la cavité de réaction cylindrique a un rayon intérieur de 4 à 5 cm, et une hauteur d'au moins environ 4 cm.

13. Utilisation d'un système d'activation électromagnétique tel que défini dans la revendication 11 ou la revendication 12 pour générer de l'hydrogène à partir d'une composition telle que définie dans la revendication 6 ou la revendication 7.

14. Système pour générer de l'hydrogène, comprenant (a) une composition telle que définie dans la revendication 6 ou la revendication 7 ; et (b) une source de rayonnement électromagnétique appropriée pour exposer la composition à un rayonnement électromagnétique et ainsi effectuer une décomposition de l'au moins un composé organique pour produire de l'hydrogène, dans lequel la source de rayonnement électromagnétique est une source de micro-ondes.
